(19) Europäisches Patentamt
European Patent Office
Office européen des brevets

(11) **EP 1 393 849 B1**

(12) **EUROPEAN PATENT SPECIFICATION**

(45) Date of publication and mention
of the grant of the patent:
**30.03.2011 Bulletin 2011/13**

(51) Int Cl.:
***B23P 15/24*** (2006.01)   ***B29C 33/42*** (2006.01)
***B29D 30/06*** (2006.01)   ***B22D 31/00*** (2006.01)
***B29L 30/00*** (2006.01)

(21) Application number: **03019393.2**

(22) Date of filing: **27.08.2003**

(54) **Method for producing a mold for molding a tire**

Verfahren zur Herstellung eines Reifenformwerkzeuges

Procédé pour la fabrication d'un moule pour pneumatiques

(84) Designated Contracting States:
**FR IT**

(30) Priority: **30.08.2002 JP 2002253926**

(43) Date of publication of application:
**03.03.2004 Bulletin 2004/10**

(73) Proprietor: **NGK Insulators, Ltd.**
**Nagoya-City, Aichi Pref. 467-8530 (JP)**

(72) Inventor: **Ishihara, Yasuyuki**
**Nagoya-City,**
**Aichi-prefecture, 467-8530 (JP)**

(74) Representative: **TBK-Patent**
**Bavariaring 4-6**
**80336 München (DE)**

(56) References cited:
**EP-A- 0 816 042   DE-A- 1 936 612**
**GB-A- 748 818**

**Description**

Background of the Invention

(1) Field of the Invention

The present invention relates to a method for producing a mold for molding a tire. More particularly, the present invention relates to a method for producing a mold for molding a tire, according to which correction of radius and roundness of ring castings can be performed simultaneously without damaging shape of crown R which is a sectional shape of a tire in width direction.

(2) Related Art Statement

A mold for molding a tire (hereinafter sometimes referred to as "a mold for tire") is often manufactured by means of casting which fits for the forming of complicated shapes conforming to the surface configuration designed as complicated configurations having sharp corners or numerous thin projections called as blades for a tire.

Molds for molding a tire manufactured by means of this casting are ordinarily divided into sub-molds, and these sub-molds are combined to form a predetermined form as a whole at the time of forming a tire. There are, as a method for dividing the mold, a method of cutting into 2 sub-molds in the direction of the central axis (2P mold) and a method of cutting into 7-11 sub-molds along the circumference (sectional mold), and these methods can be optionally selected depending on the production conditions, etc.

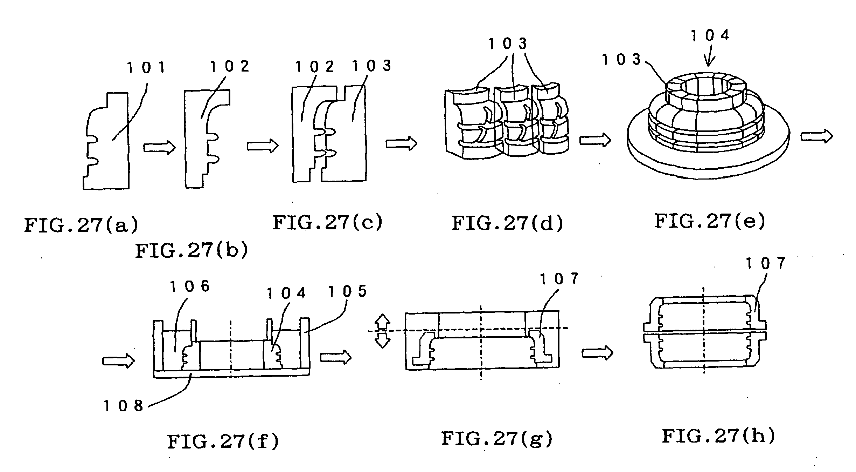

For example, when a mold for molding a tire of 2P mold type is made by using a plaster casting method, as shown in Fig. 27(a) to Fig. 27(h), a master model 101 having a surface configuration conforming to a part of the surface configuration of a tire is formed by machining or the like (Fig. 27(a)), a rubber mold 102 having a configuration reverse to that of the master model 101 is formed (Fig. 27(b)), a required number of sub-molds 103 having a configuration reverse to that of the rubber mold 102 is formed (Fig. 27(c)), the respective sub-molds are dried (fired) and subjected to angle working by end face cutting so that they can be assembled (Fig. 27(d)), and the respective sub-molds 103 are assembled to form a whole mold 104 for one ring (Fig. 27(e)). The thus formed whole mold 104 is placed on a platen 108 and enclosed with a casting frame 105, and a molten alloy 106 is poured into the space between the whole mold 104 and the casting frame 105 and is hardened (Fig. 27(f) and Fig. 27(g)). In this way, a mold for tire 107 having a configuration reverse to the desired configuration is produced (Fig. 27(h)).

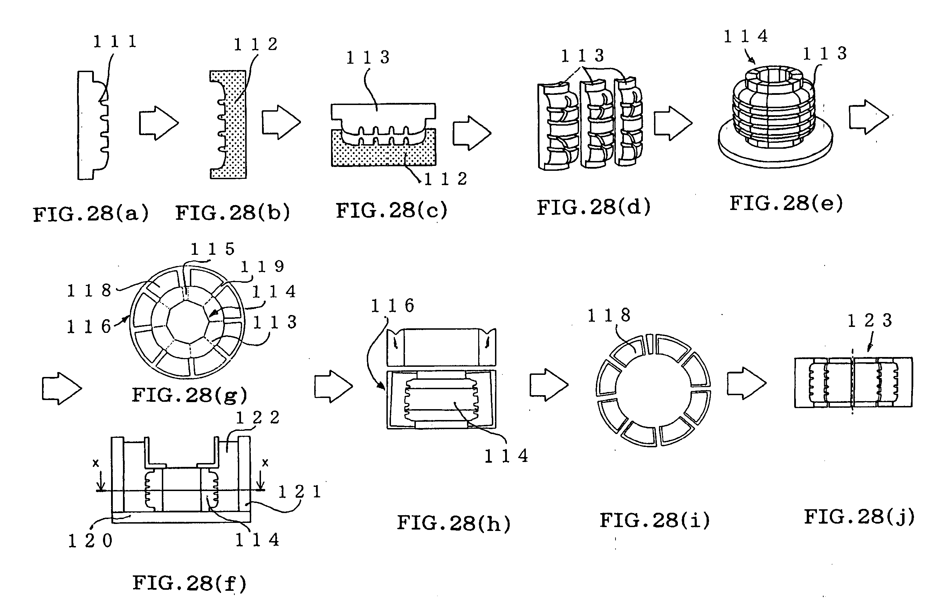

For example, when a mold for molding a tire of sectional mold type is produced using a plaster casting method, as shown in Fig. 28(a) to Fig.28(j), a master model 111 of a basic configuration having a size of one of several parts obtained by dividing a desired tire configuration in circumferential direction is formed by machining or the like (Fig. 28(a)), a rubber mold 112 having a configuration reverse to that of the master model 111 is formed, a required number of sub-molds 113 having a configuration reverse to that of the rubber mold 112 are formed (Fig. 28(b) and Fig. 28(c)), the respective sub-molds are dried (fired) and subjected to angle working by end face cutting so that they can be assembled (Fig. 28(d)), and the respective sub-molds 113 are assembled to form a whole mold 114 for one ring (Fig. 28(e)). In this case, in order that working margins 119 can be secured at the end face (end face of sector) of the respective sub-molds (sectors) 118 corresponding to casting 116 of reverse configuration, working margins are also formed at the both end faces of the sub-molds 113, and, if necessary, a dummy mold 115 is incorporated and thus a whole mold 114 having a given ring diameter is assembled. The thus formed whole mold 114 is placed on a platen 120 and enclosed with a casting frame 121, and a molten alloy 122 is poured into the space between the whole mold 114 and the casting frame 121 and is hardened (Figs. 28(f) and (g)). Then, the whole mold 114 is removed from the thus obtained casting 116 (Fig. 28(h)) and divided into the respective sectors 118, followed by subjecting the bottom face portion to milling to minimize the differential between upper and lower radius, subjecting the end face portion to milling and subjecting the outer peripheral surface to turning (Fig. 28(i)), thereby producing a mold for tire 123 (Fig. 28(j)).

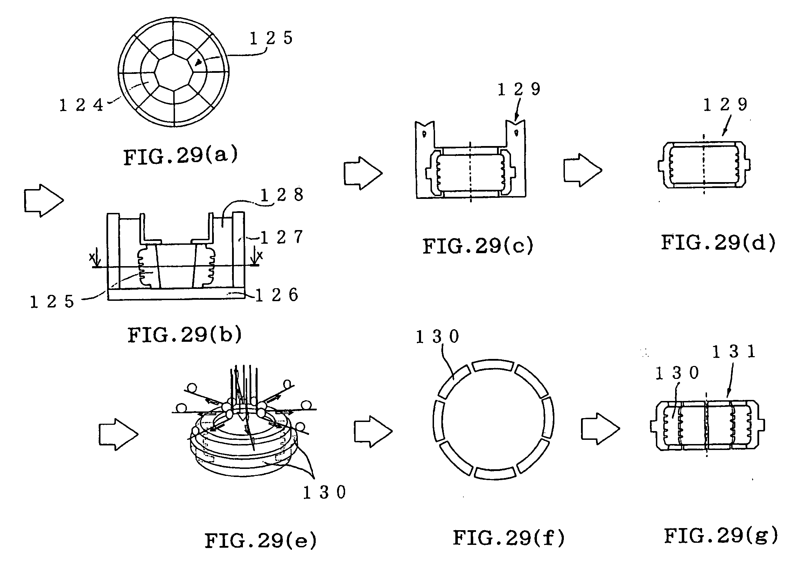

Furthermore, for producing a mold for molding a tire of sectional mold type, there are the following methods in addition to the method of carrying out casting in such a state as the working margin 119 being secured at the end face of the sector 118 as shown in Fig. 28(g) (an end wall margin setting method). First, a sub-mold 124 is formed by the method mentioned above; at the step of combining the sub-molds 124 to form a whole mold 125, the sub-molds 124 are combined without securing the working margin 119, namely, in the state of no margin portion being formed at the sector end face; the thus formed whole mold 125 is placed on a platen 126 and enclosed with a casting frame 127; and a molten alloy 128 is poured into the space between the whole mold 125 and the casting frame 127 (Fig. 29(a) and Fig. 29(b)) to cast a casting 129 of a desired shape (Fig. 29(c)). The thus obtained casting 129 is removed from the mold, the margin portion on the back surface of the casting 129 is machined (Fig. 29(d)), the casting is divided into sub-molds (sectors) 130 by wire electrical discharge machinery or the like (Fig. 29(e) and Fig. 29(f)), and the resulting sub-molds (sectors) 130 are assembled to produce a mold for tire 131 (Fig. 29(g)).

The above-mentioned mold for tire of 2P mold type is less in the number of division of the mold and simple in mold structure, and hence has a merit of less mold production cost, but has a disadvantage that when a tire molded is removed from the mold, an undercut portion is apt to be formed at the projection parts (ribs or side blades) in the inner peripheral surface of the mold (design surface), which makes it difficult to demold the tire in the case of complicated design. Moreover, the mold for tire of sectional mold type has superiority in dimensional accuracy and the formation of the undercut portions can be readily avoided, but has a disadvantage that the production cost for the mold increases.

Furthermore, as general casting methods, there are ceramic mold method and die casting method in addition to the above plaster casting method. However, the plaster casting method is mainly employed for producing mold for tires since the mold used has disintegration (fragile) property and has a high degree of freedom for coping with the reduction in the undercut portion, assembling of molds can be simply performed, the divided molds can be cast in nearly integral shape, dimensional accuracy is high, and production cost for the mold is low.

According to the method for producing molds for molding tires as shown in Fig. 27(a) to Fig. 27(h), Fig. 28(a) to Fig. 28(j) and Fig. 29(a) to Fig. 29(g), since the casting is cast in the state of a ring, ununiform strain is sometimes generated in respect to the central axis of the ring during hardening and shrinking with cooling of a molten aluminum alloy, which may cause deterioration of roundness (deflection width from standard roundness) characteristics of inner peripheral surface (design surface) in the casting as cast (ring casting).

Moreover, ununiform shrinkage of the casting is apt to occur during casting, and this sometimes causes deviation of inner diameter of the ring casting from the tolerance for desired inner diameter.

The radius and roundness of each part in mold for tires are important control items which determine the performance of the tire molded by the molds. Although they are varied for each tire maker, the required accuracy yearly increases and is approaching to the limit of production by casting method. The present required accuracy is such that the tolerance is about $\pm 0.2$ mm for diameter and about 0.25 mm for roundness in the case of usual accuracy specification and $\pm 0.1$-0.15 mm for diameter and 0.1-0.15 mm for roundness in the case of high accuracy specification, which are close to machining specifications.

The sectional mold method which aims at producing round castings in sector block units and produces a ring casting in the form of a petal with an end face margin (hereinafter sometimes referred to as "end face margin setting method") as shown in Figs. 28(a) to Fig. 28(j) can produce a mold for tire which satisfies the above-mentioned prescribed accuracy most effectively among the plaster casting methods employed at present.

According to the above end face margin setting method, after a casting which is cast in the state of a ring is divided into sectors in circumferential direction, the divided castings are adjusted so that they can be placed at given positions, and then working of the upper and lower faces, end faces and outer peripheral surface can be performed.

Furthermore, the casting in the state of a continuous ring (as cast state) can be subjected to steps of dividing into sectors and reassembling them even if the roundness characteristics are inferior, namely, since the both end portions of sector divided face are positioned at zero and end face angle working becomes possible, the roundness characteristics can be improved as compared with the state of a ring (as cast state).

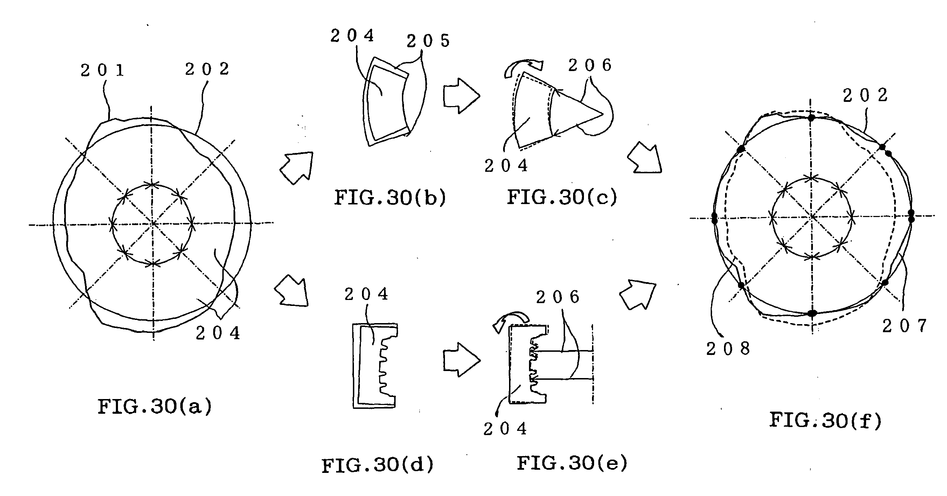

Specifically, according to a method for improving roundness characteristics in the method for producing a mold for tire of sectional mold type by the end face margin setting method, in case the radius of the inner configuration 201 in the state of a ring casting deviates from the desired radius of the inner configuration 202 and the roundness is inferior as shown in Fig. 30(a), the ring casting is sector-divided into piece castings 204, and thereafter both end portions of Pf face of the divided piece castings 204 in the circumferential direction are set at the position of normal radius 206, and positional adjustment of the sectors is conducted so that the normal radius 206 is also attained between the upper and lower molds, followed by carrying out outer peripheral working. This step is carried out for the respective piece castings 204 similarly.

By employing such construction, there can be produced a mold for tire improved in radius and roundness characteristics than in the state of ring in a whole mold formed by combining the piece castings as shown in Fig. 30(f). In Fig. 30(f), reference numeral 207 shows inner configuration after carrying out adjustment working and reference numeral 208 shows inner configuration in the state of ring.

For the above reasons, the above-mentioned end face margin setting method is often used as a method for producing a mold for tire of high dimensional accuracy, but this end face margin setting method has the disadvantage that it requires more steps of outer peripheral working of the casting than other methods for producing mold for tires, and hence needs higher production cost. Moreover, since the sector-divided surface of the piece castings is subjected to machining, dislocation and deformation of tire design are sometimes caused on the sector divided faces (both end faces), which is disadvantageous.

On the other hand, in the case of other methods than the end face margin setting method, for example, in the case of the methods shown in Fig. 27(a) to Fig. 27(h) or Fig. 29(a) to Fig. 29(g), if the diameter or roundness in the state of a ring casting is not in a given numerical range, correction of diameter or roundness is carried out in the state of ring casting.

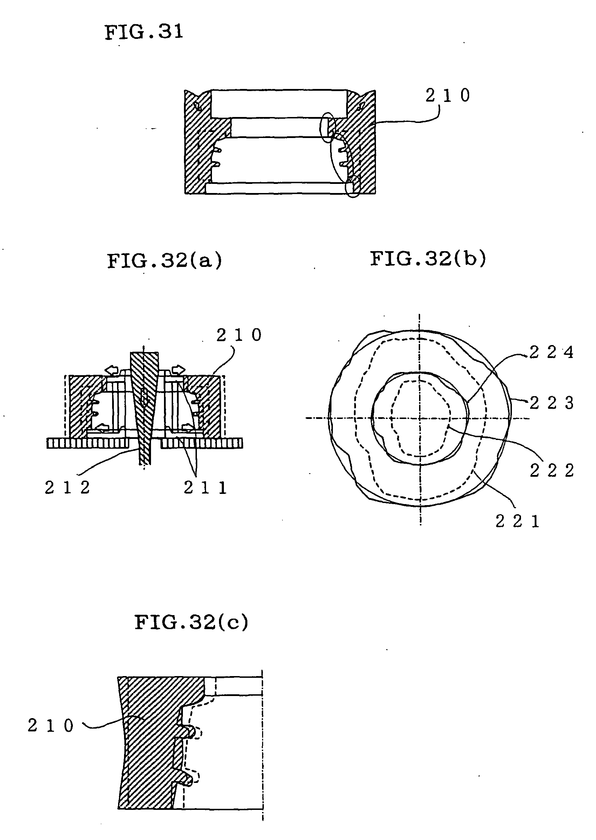

For example, as shown in Fig. 31, in case the radius of the ring mold 210 formed is smaller than the objective radius, the radius of the inner peripheral surface of the ring casting 210 is extended using a cam-actuated expander. Specifically, as shown in Fig. 32(a), fan-shaped slide dowels 211 are provided at top and bottom of the inner peripheral surface of the ring casting 210, and correction of roundness is conducted with extending the radius of the ring casting 210 by projecting the fan-shaped slide dowels 211 in a given amount. By carrying out the correction in this way, the radius is extended and further the roundness characteristics are also improved as compared with the inner peripheral surface of the ring casting before carrying out the correction as shown in Fig. 32(b). In Fig. 32(b), reference numeral 221 shows configuration of inner peripheral surface of the centerline part before correction, reference numeral 222 shows configuration of inner peripheral surface of the shoulder part before correction, reference numeral 223 shows configuration of inner peripheral surface of the shoulder part after correction, and reference numeral 224 shows configuration of inner peripheral surface of the shoulder part after correction.

However, as shown in Fig. 32(c), since radius of only the portion in the vicinity of the upper and lower parts of the inner peripheral surface of the ring casting 210 is extended, the radius of the center part of the inner peripheral surface is hardly extended, resulting in so-called backward bending.

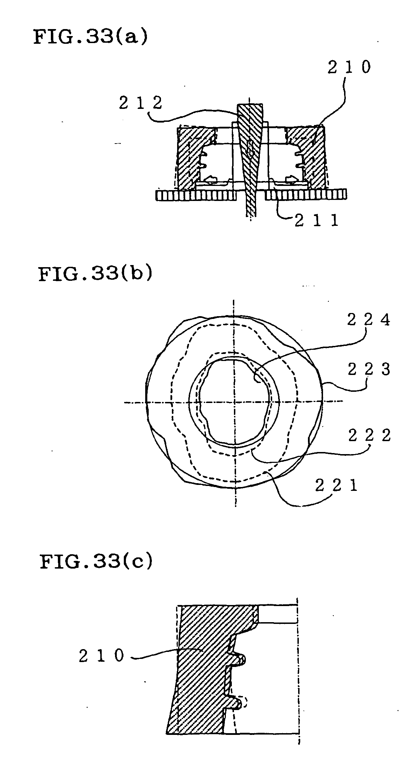

Moreover, as shown in Fig. 33(a), when correction is performed using a cam-actuated expander 212 by providing fan-shaped slide dowels 211 on the lower side of the inner peripheral surface of the ring casting 210, the radius of the lower side part of the inner peripheral surface of the ring casting 210 is extended and simultaneously the radius of the upper side of the inner peripheral surface is somewhat shortened by the reaction as shown in Fig. 33(b) and Fig. 33(c).

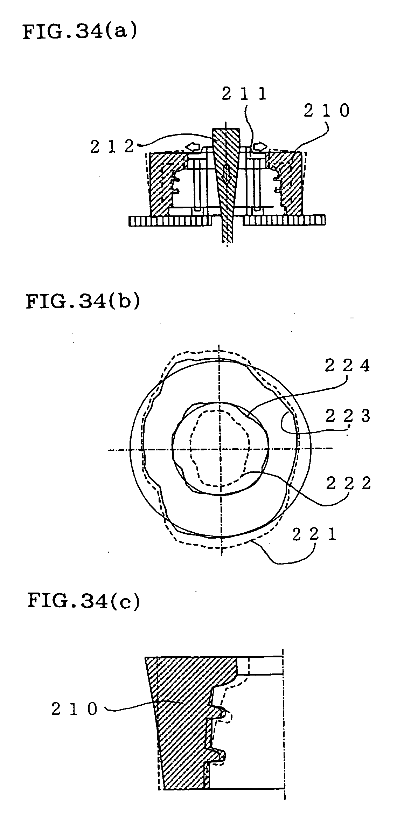

Further, as shown in Fig. 34(a), when correction is performed using a cam-actuated expander 212 by providing fan-shaped slide dowels 211 on the upper side of the inner peripheral surface of the ring casting 210, the radius of the upper side part of the inner peripheral surface of the ring casting 210 is extended and simultaneously the radius of the lower side part of the inner peripheral surface is somewhat shortened by the reaction as shown in Fig. 34(b) and Fig. 34(c).

According to the above-mentioned method for extending the radius of the inner peripheral surface of the ring casting by cam-actuated expander, the upper and lower standard radius portions (surface portions as cast) having a high correlation with the inner peripheral surface in tendency of roundness are projected by the fan-shaped slide dowels in the true circle shape, and hence the portion of smaller curvature (namely, the portion of larger radius) undergoes a larger correction strain. In addition, a total tensile strain is applied owing to the extension of radius, and as a result, the portion subjected to projection correction is extended in radius and simultaneously improved in roundness characteristics than in as cast state (improvement of roundness due to Bauschinger effect). However, these method are apt to cause backward bending phenomenon in the crown R shape (sectional shape in the width direction of tire). The crown R shape is a control item for mold for tire which is recently regarded as important and is now being considered to be a control item indispensable for improving tire performance to the utmost limits.

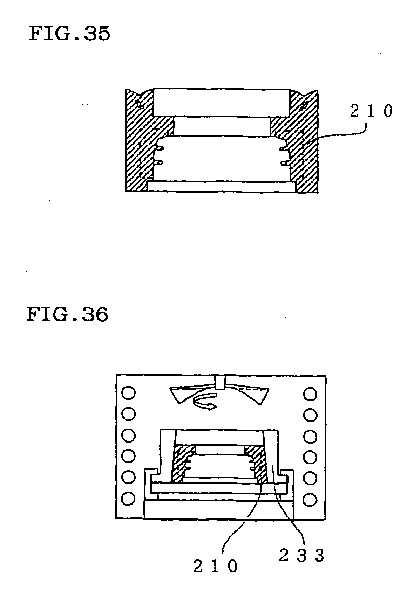

Moreover, as shown in Fig. 35, when the ring casting 210 is formed in larger radius than the objective radius, the outer peripheral surface of the ring casting is covered with a restraining ring, followed by subjecting to a heat treatment to shorten the radius of the inner peripheral surface of the ring casting 210.

Specifically, there are the following methods, namely, a method of providing a restraining ring 233 having the same shape (taper shape) as the shape of the outer peripheral surface of the ring casting 210 , followed by carrying out heat treatment, as shown in Fig. 36, a method of providing the restraining ring 233 on the lower side of the outer peripheral surface of the ring casting 210, followed by carrying out heat treatment, as shown in Fig. 37, a method of providing the restraining ring 233 on only the upper side of the outer peripheral surface of the ring casting 210, followed by carrying out heat treatment, as shown in Fig. 38, etc.

The above-mentioned method of reducing the radius of the inner peripheral surface of a ring casting by a restraining ring can reduce the radius in high accuracy, but since the reduction correction is carried out after the outer peripheral surface of the ring casting is subjected to machining so as to form true circle, basically the roundness characteristics of the ring casting are not improved.

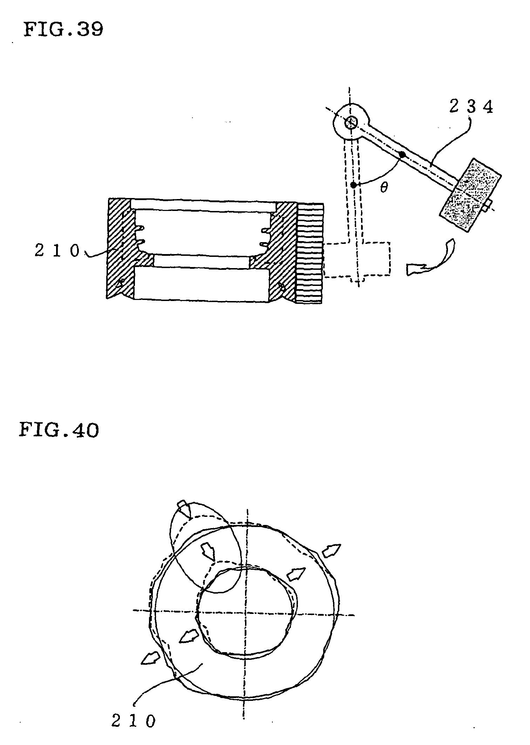

Further, as shown in Fig. 39, there is a method of carrying out the correction of roundness while partially reducing the radius of the ring casting 210 by striking method with a pendulum type hammer 234. According to this method, since the striking energy can be controlled by the weight of the pendulum type hammer 234 and the striking angle, correction of radius reduction in 0.1 mm unit becomes possible.

In this case, as shown in Fig. 40, the radius of the struck portion of the outer peripheral surface of the ring casting 210 is preferentially reduced, but the radius of the portion deviating by 90° on both sides is somewhat extended. As a whole, in general, there is substantially no difference in average radius before and after carrying out the correction.

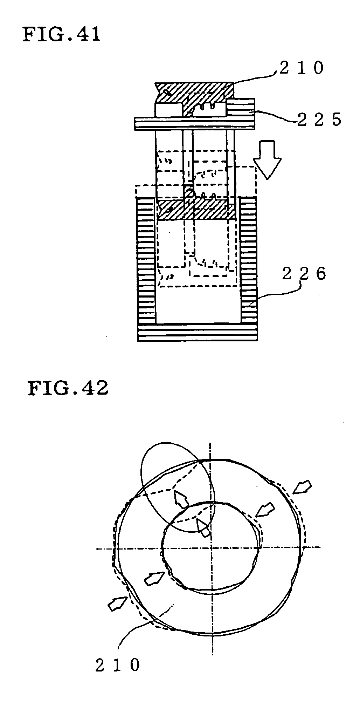

Further, there is a method of improving the roundness characteristics by partially extending the radius of the ring casting 210 using a drop impact method as shown in Fig. 41. Specifically, the ring casting 210 is dropped together with a fixing hammer 225 on a trestle 226. Since the impact energy can be controlled by own weight of the ring casting 210 and dropping head, correction of radius reduction in 0.1 mm unit becomes possible.

In this case, as shown in Fig. 42, the radius of the struck portion of the ring casting 210 is preferentially extended, but the radius of the portion deviating by 90° on both sides is somewhat reduced. As a whole, in general, there is substantially no difference in average radius before and after carrying out the correction.

In the striking method and drop impact method using pendulum type hammer 234 shown in Fig. 39 and Fig. 41, when the striking load uniformly acts on the whole surface of the ring casting 210 in the direction of tire width, it can be said that the crown R shape hardly changes, but it is very difficult to apply uniform striking load in the direction of tire width, and actually there occurs backward bending in the crown R shape of the ring casting 210.

As explained above, conventional technologies have the problems that correction of radius and correction of roundness of a ring casting cannot be simultaneously performed without damaging the crown R shape.

Summary of the Invention

The present invention has been accomplished in an attempt to solve the above problems, and the object is to provide a method for producing a mold for molding a tire according to which correction of radius and correction of roundness of a ring casting can be simultaneously performed without damaging the crown R shape which is a sectional shape of the tire in width direction.

For attaining the above object, the present invention provides the following method for producing a mold for molding a tire.

[1] A method for producing a mold for molding a tire which comprises forming a plurality of sub-molds having a surface configuration constituting a part of the surface configuration of the tire, combining the sub-molds to form a whole mold having the configuration of the tire, enclosing the thus formed whole mold with a casting frame, and pouring a molten metal into the space between the whole mold and the casting frame and hardening the molten metal to cast a casting as a mold having a configuration reverse to that of the tire, characterized in that said casting is cast so that radius of a circle constituting the inner peripheral surface of the casting is longer by a given length than the objective radius (Rn), the configuration of the outer peripheral surface of the casting is subjected to machining so that the casting has a configuration of curved surface X defined below, and the machined casting is fitted in a restraining ring which is lower in thermal expansion coefficient and higher in yield strength than the casting so that the outer peripheral surface of the casting contacts with the inner peripheral surface of the restraining ring and is heated at 100-400°C to reduce the radius of the inner peripheral surface of the casting and simultaneously improve the roundness characteristics of the casting (hereinafter sometimes referred to as "the first invention").

Curved surface X: a curved surface constituted of radii having a length $((D)+n((Rj)-(Ra))+(Ra)-(Rn))$ obtained by adding a sum $(n((Rj)-(Ra))+(Ra)-(Rn))$ of a value $(n((Rj)-(Ra))$ obtained by multiplying by n (n being a real number of 1 or more) a value obtained by subtracting an average radius (Ra) from an actual radius (Rj) and of a value $((Ra)-(Rn))$ obtained by subtracting the objective radius (Rn) from the average radius (Ra) to a distance (D) between a central axis of the tire and a second fixed point at which a straight line including the actual radius (Rj) crosses with a curved surface Y of a supposed revolving body having the above central axis as a center and supposed to form an outer peripheral configuration having a working margin of 2-30 mm (in which the actual radius (Rj) is a length measured as a shortest distance between the axis including the center of the circle (central axis of tire) and a given number of first fixed points on a curved line at which a given number of supposed planes supposed to be perpendicular to the central axis of the tire and to hold a given interval therebetween cross with the inner peripheral surface of the casting; and the average radius (Ra) is a length calculated by additional averaging of the actual radii (Rj)).

[2] A method for producing a mold for molding a tire which comprises forming a plurality of sub-molds having a surface configuration constituting a part of the surface configuration of the tire, combining the sub-molds to form a whole mold having the configuration of the tire, enclosing the thus formed whole mold with a casting frame, and pouring a molten metal into the space between the whole mold and the casting frame and hardening the molten metal to cast a casting as a mold having a configuration reverse to that of the tire, characterized in that said casting is cast so that radius of a circle constituting the inner peripheral surface of the casting is longer by a given length than the objective radius (Rn), an actual radius (Rj) is measured in each of the portions obtained by dividing the inner peripheral surface of the casting into 8-72 equal portions, the configuration of the outer peripheral surface of the casting is subjected to machining so that the casting has an outer peripheral configuration having a working margin of 2-30 mm with respect to the desired shape of the tire, a metal plate having a thickness Z defined below is stuck to the portion of the outer peripheral surface of the machined casting corresponding to each of the portions in which the actual radius (Rj) is measured, the casting to which the metal plate is stuck is fitted in a restraining ring which is lower in thermal expansion coefficient and higher in yield strength than the casting so that the outer peripheral surface of the casting contacts with the inner peripheral surface of the restraining ring and is heated at 100-400°C to reduce the radius of the inner peripheral surface of the casting and simultaneously improve the roundness characteristics of the casting (hereinafter sometimes referred to as "the second invention").

Thickness Z: a thickness corresponding to a sum $(n((Rj)-(Rs))+(Rs)-(Rn))$ of a value $(n((Rj)-(Rs))$ obtained by multiplying by n (n being a real number of 1 or more) a value obtained by subtracting a radius (Rs) of an inscribed circle at the inner peripheral surface of the casting from the actual radius (Rj) and a value $((Rs)-(Rn))$ obtained by subtracting the objective radius (Rn) from the radius (Rs) of the inscribed circle (in which the actual radius (Rj) is a length measured as a shortest distance between the axis including the center of the circle (central axis of tire) and a given number of the first fixed points on a curved line at which a given number of supposed planes supposed to be perpendicular to the central axis of the tire and to hold a given interval therebetween cross with the inner peripheral surface of the casting).

[3] A method for producing a mold for molding a tire described in the above [1] or [2] wherein a groove extending in the direction of a central axis of the tire is formed on the outer peripheral surface of the casting which has been subjected to machining.

Brief Explanation of Drawings

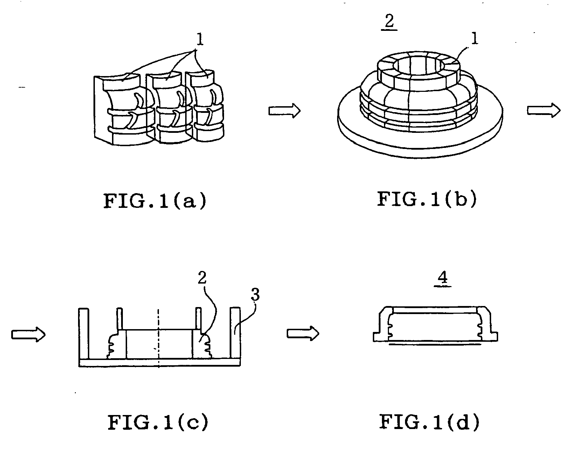

Fig. 1(a) to Fig. 1(d) are explanatory drawings which show a part of steps in sequence in the method for producing a mold for molding a tire according to one embodiment of the present invention (the first invention).

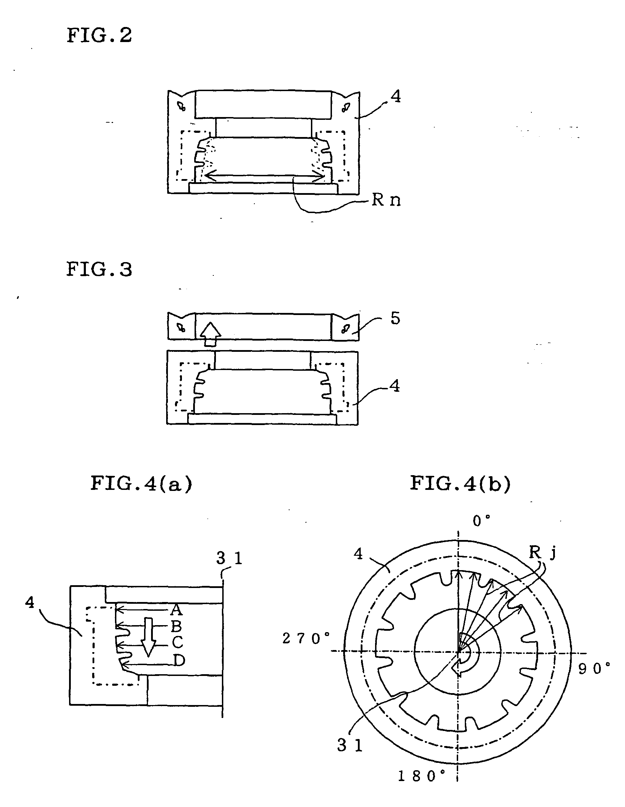

Fig. 2 is a sectional view which schematically shows the ring casting in the method for producing a mold for molding a tire according to one embodiment of the present invention (the first invention).

Fig. 3 is a sectional view which schematically shows the steps of cutting and removing the hot top of the ring casting in the method for producing a mold for molding a tire according to one embodiment of the present invention (the first invention).

Fig. 4 is an explanatory drawing which schematically shows steps of measuring an actual radius of the ring casting in a method for producing a mold for molding a tire according to one embodiment of the present invention (the first invention), in which (a) is a sectional view in a plane including the central axis of the tire and (b) is a sectional view in a plane perpendicular to the central axis of the tire.

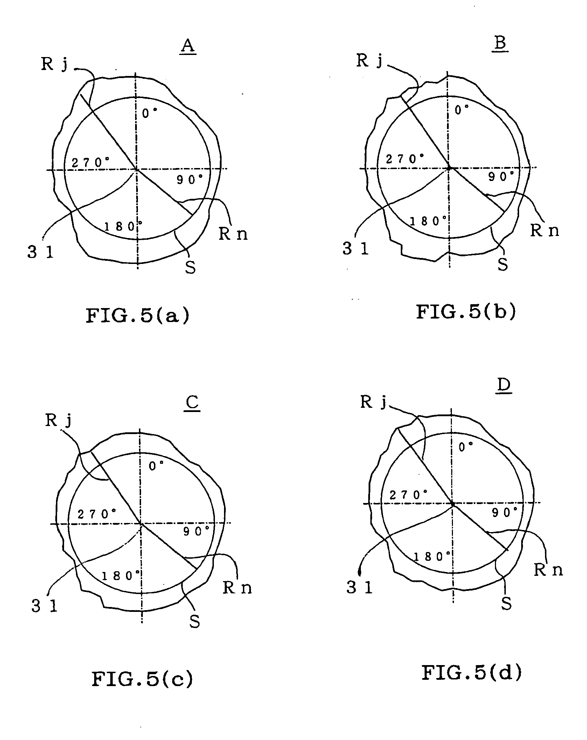

Fig. 5(a) to Fig. 5(d) are sectional views of the ring casting in a plane perpendicular to the central axis of the tire in a method for producing a mold for molding a tire according to one embodiment of the present invention (the first invention).

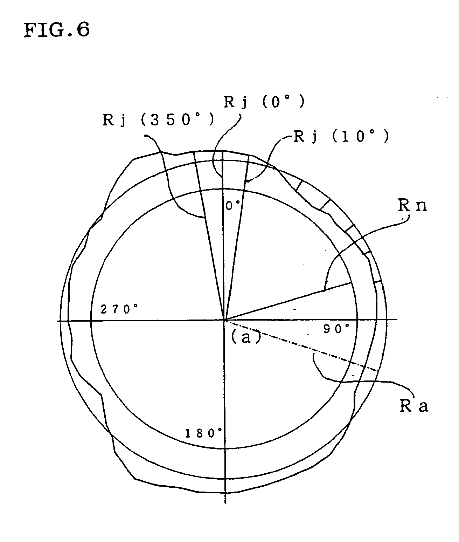

Fig. 6 is a sectional view of the ring casting in a plane perpendicular to the central axis of the tire which schematically shows the configuration of the ring casting in a method for producing a mold for molding a tire according to one embodiment of the present invention (the first invention).

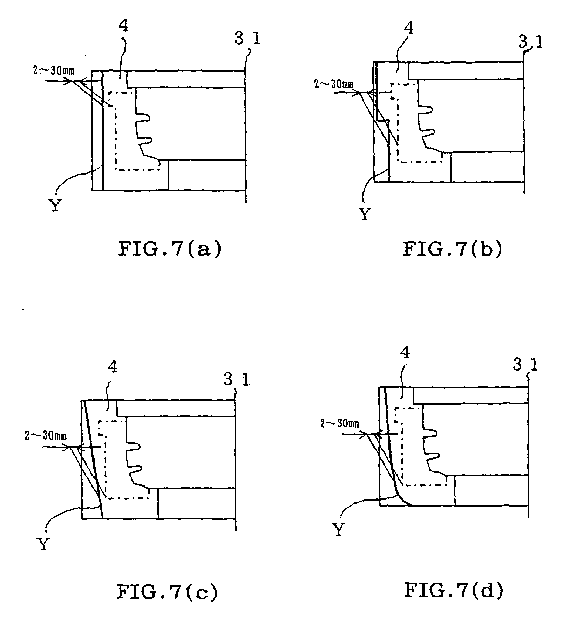

Fig. 7(a) to Fig. 7(d) are sectional views of the ring casting in a plane including the central axis which show the curved surface Y in a method for producing a mold for molding a tire according to one embodiment of the present invention (the first invention).

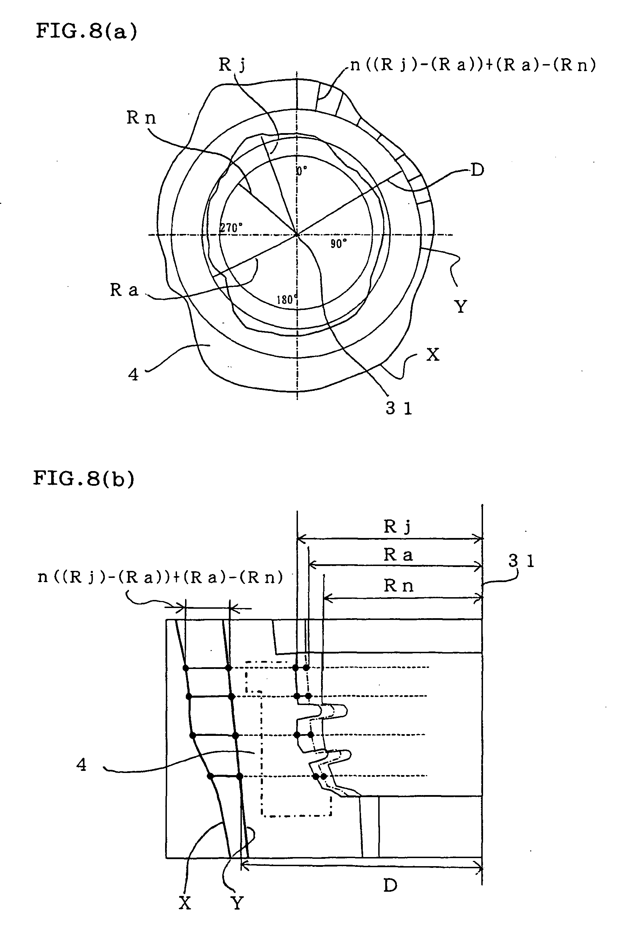

Fig. 8 is an explanatory drawing which schematically shows the configuration of the ring casting in a method for producing a mold for molding a tire according to one embodiment of the present invention (the first invention), in which (a) is a sectional view in a plane perpendicular to the central axis of the tire and (b) is a sectional view in a plane including the central axis of the tire.

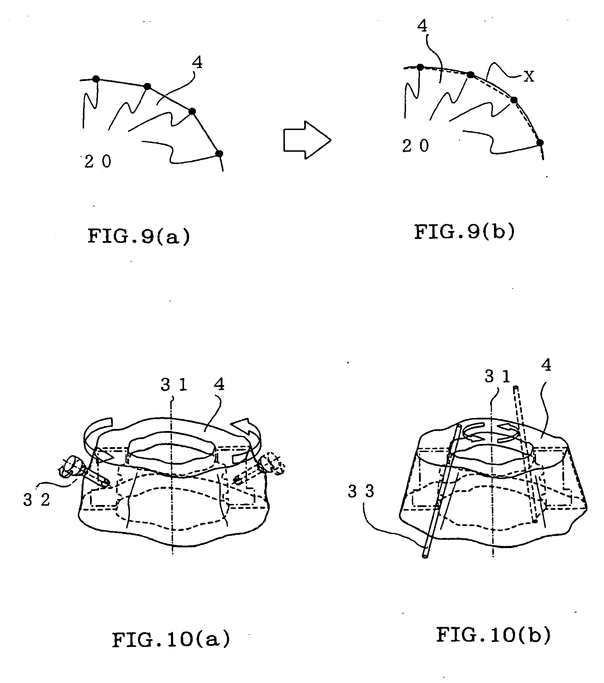

Fig. 9 is an explanatory drawing which schematically shows the steps of connecting the point data in a method for producing a mold for molding a tire according to one embodiment of the present invention (the first invention), in which (a) shows the step of connecting the point data with a straight line and (b) shows the step of connecting the point data with a gentle curved line.

Fig. 10 is an oblique view which shows the steps of machining the outer peripheral surface of the ring casting in a method for producing a mold for molding a tire according to one embodiment of the present invention (the first invention), in which (a) shows an NC end milling and (b) shows a wire electric discharge machining.

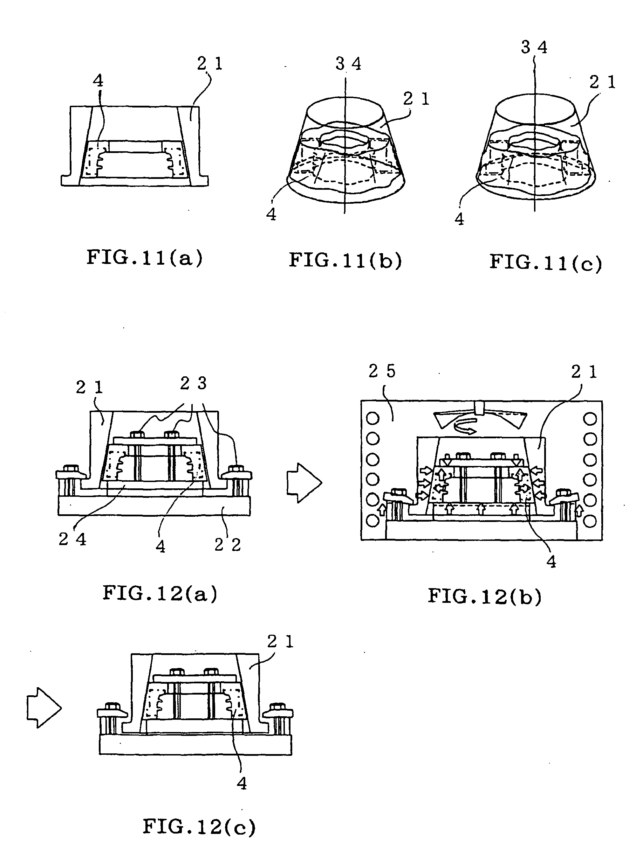

Fig. 11 is an explanatory drawing which schematically shows the ring casting fitted in a restraining ring in a method for producing a mold for molding a tire according to one embodiment of the present invention (the first invention), in which (a) is a sectional view and (b) and (c) are oblique views.

Fig. 12(a) to Fig. 12(c) are sectional views which show heat treating steps in sequence of the ring casting in the method for producing a mold for molding a tire according to one embodiment of the present invention (the first invention).

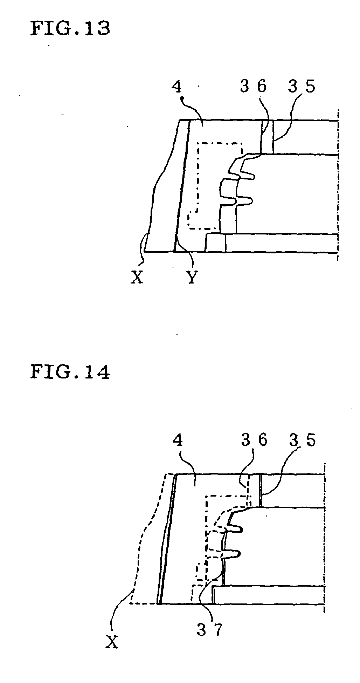

Fig. 13 is a sectional view which shows the ring casting before being subjected to the heat treating step in the method for producing a mold for molding a tire according to one embodiment of the present invention (the first invention).

Fig. 14 is a sectional view which shows the ring casting after being subjected to the heat treating step in the method for producing a mold for molding a tire according to one embodiment of the present invention (the first invention).

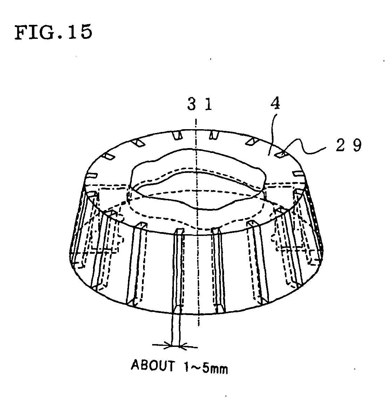

Fig. 15 is an oblique view which shows the ring casting on which grooves are formed in the method for producing a mold for molding a tire according to one embodiment of the present invention (the first invention).

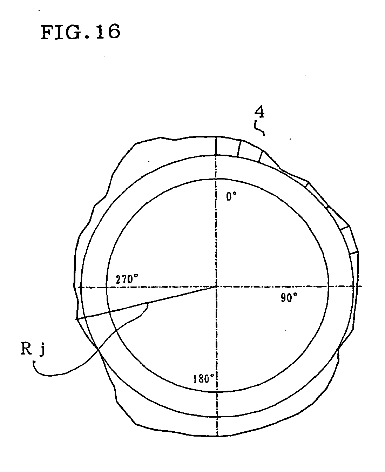

Fig. 16 is a sectional view of the ring casting in a plane perpendicular to the central axis of the tire which shows the configuration of the inner peripheral surface of the ring casting in the method for producing a mold for molding a tire according to one embodiment of the present invention (the second invention).

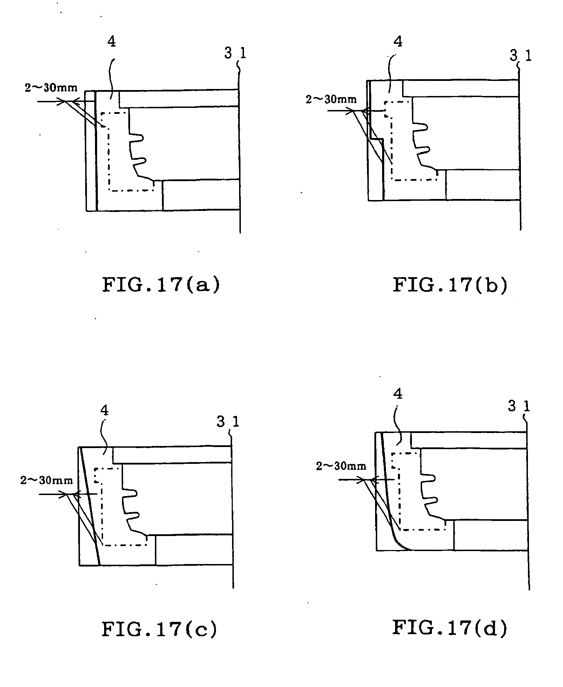

Fig. 17(a) to Fig. 17(d) are sectional views of the ring casting in a plane perpendicular to the central axis of the tire which show the configuration into which the outer peripheral surface is machined in the method for producing a mold for molding a tire according to one embodiment of the present invention (the second invention).

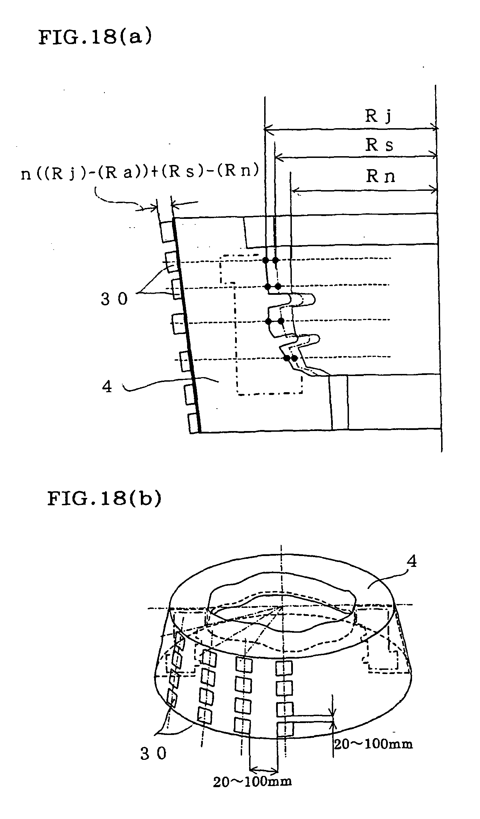

Fig. 18 is an explanatory drawing which schematically shows the configuration of the ring casting in a method for producing a mold for molding a tire according to one embodiment of the present invention (the second invention), in which (a) is a sectional view in a plane including the central axis of the tire and (b) is an oblique view.

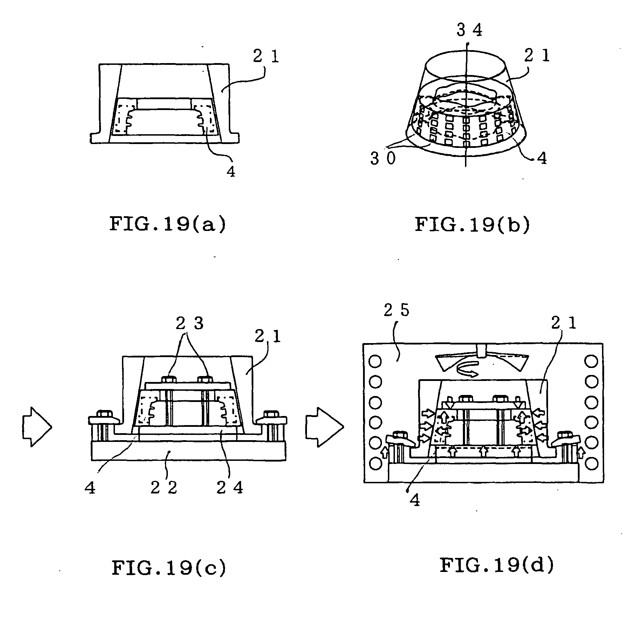

Fig. 19(a) to Fig. 19(d) are sectional views or oblique views which show heat treating steps in sequence of the ring casting in the method for producing a mold for molding a tire according to one embodiment of the present invention (the second invention).

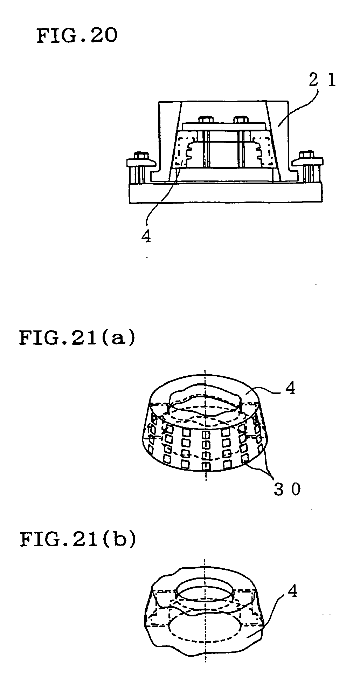

Fig. 20 is a sectional view which shows the ring casting obtained by the heat treatment in the method for producing a mold for molding a tire according to one embodiment of the present invention (the second invention).

Fig. 21 is an oblique view which shows the ring casting obtained by the heat treatment in the method for producing a mold for molding a tire according to one embodiment of the present invention (the second invention), in which (a) shows the ring casting to which metal plates are stuck and (b) shows the ring casting from which the metal plates are removed.

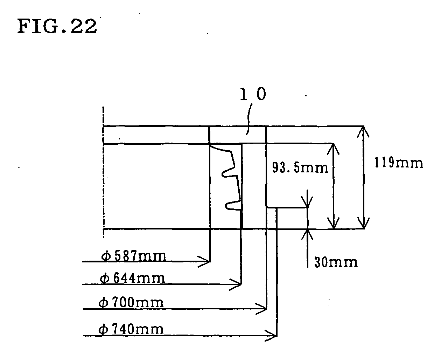

Fig. 22 is a sectional view which schematically shows the mold for molding a tire produced in the examples of the present invention.

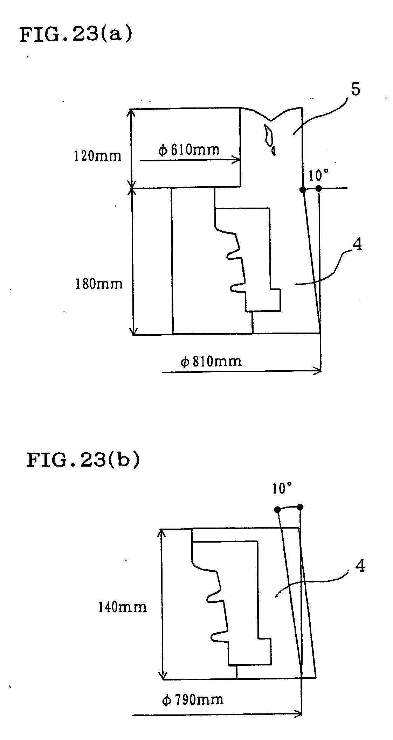

Fig. 23 is a sectional view which schematically shows the ring casting used in Example 1 of the present invention, in which (a) shows the ring casting as cast and (b) shows the ring casting from which a hot top portion has been removed.

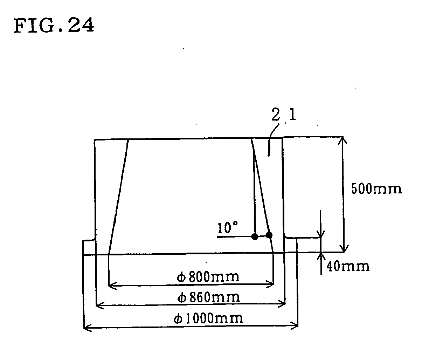

Fig. 24 is a sectional view which schematically shows a restraining ring used in Example 1 of the present invention.

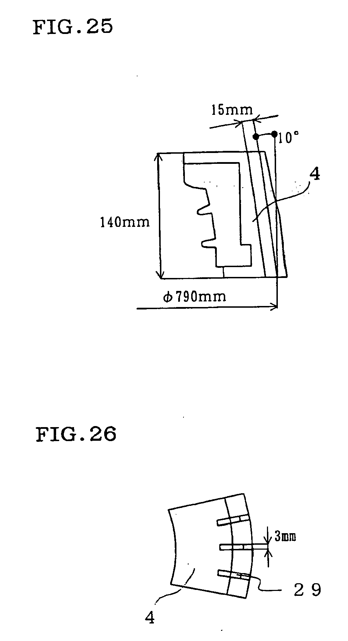

Fig. 25 is a sectional view which schematically shows the ring casting used in Example 3 of the present invention.

Fig. 26 is a sectional view which schematically shows the ring casting on which grooves are formed and which is used in Example 3 of the present invention.

Fig. 27(a) to Fig. 27(h) are explanatory drawings which show steps in sequence in the conventional methods for producing a mold for molding a tire.

Fig. 28(a) to Fig. 28(j) are explanatory drawings which show steps in sequence in the conventional methods for producing a mold for molding a tire.

Fig. 29(a) to Fig. 29(g) are explanatory drawings which show steps in sequence in the conventional methods for producing a mold for molding a tire.

Fig. 30(a) to Fig. 30(f) are explanatory drawings which show steps in sequence in the conventional methods for producing a mold for molding a tire.

Fig. 31 is a sectional view which shows the ring casting used in the conventional methods for producing a mold for molding a tire.

Fig. 32 is an explanatory drawing which shows steps of extending the diameter of the ring casting using a cam-actuated expander in the conventional methods for producing a mold for molding a tire, in which (a) is a sectional view in a plane including the central axis of the tire, (b) is a sectional view in a plane perpendicular to the central axis of the tire, and (c) is a sectional view in a plane including the central axis of the tire after the diameter of the ring casting is extended.

Fig. 33 is an explanatory drawing which shows steps of extending the diameter of the ring casting using a cam-actuated expander in the conventional methods for producing a mold for molding a tire, in which (a) is a sectional view in a plane including the central axis of the tire, (b) is a sectional view in a plane perpendicular to the central axis of the tire, and (c) is a sectional view in a plane including the central axis of the tire after the diameter of the ring casting is extended.

Fig. 34 is an explanatory drawing which shows steps of extending the diameter of the ring casting using a cam-actuated expander in the conventional methods for producing a mold for molding a tire, in which (a) is a sectional view in a plane including the central axis of the tire, (b) is a sectional view in a plane perpendicular to the central axis of the tire, and (c) is a sectional view in a plane including the central axis of the tire after the diameter of the ring casting is extended.

Fig. 35 is a sectional view which shows the ring casting used in the conventional methods for producing a mold for molding a tire.

Fig. 36 is a sectional view which schematically shows steps of carrying out a heat treatment with providing a restraining ring in the conventional methods for producing a mold for molding a tire.

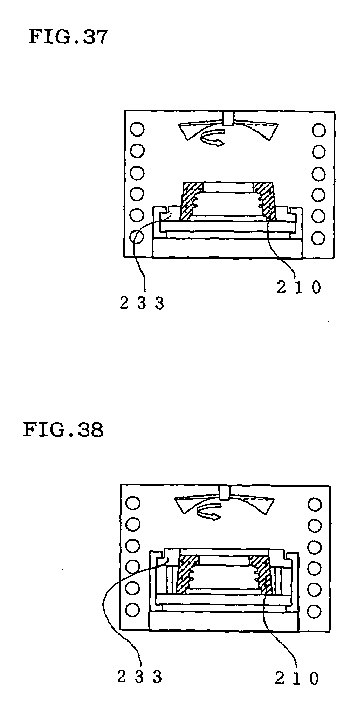

Fig. 37 is a sectional view which schematically shows steps of carrying out a heat treatment with providing a restraining ring in the conventional methods for producing a mold for molding a tire.

Fig. 38 is a sectional view which schematically shows steps of carrying out a heat treatment with providing a restraining ring in the conventional methods for producing a mold for molding a tire.

Fig. 39 is a sectional view which schematically shows a striking method using a pendulum type hammer in the conventional methods for producing a mold for molding a tire.

Fig. 40 is a sectional view which schematicallyshows the ring casting corrected by the striking method using a pendulum type hammer in the conventional methods for producing a mold for molding a tire.

Fig. 41 is a sectional view which schematically shows a dropping impact method in the conventional methods for producing a mold for molding a tire.

Fig. 42 is a sectional view which schematically shows the ring casting corrected by the dropping impact method in the conventional methods for producing a mold for molding a tire.

Detailed Description of the Preferred embodiments

Embodiments of the method for producing a mold for molding a tire according to the present invention (the first invention and the second invention) will be specifically explained below referring to the drawings. The present invention is not limited to these embodiments, and changes and modifications may be made on the basis of knowledge of one skilled in the art without departing from the scope of the invention which is defined by the appended claims. In the following description, the respective reference numerals in the accompanying figures have the following meanings or show the part or member specified below: 1···sub-mold, 2···whole mold, 3···casting frame, 4···ring casting, 5···hot top portion, 10···mold for tire, 20···point data, 21··· restraining ring, 22···platen, 23···bolt, 24···cushioning plate, 25···heat treating oven, 29···groove, 30···metal plate, 31··· central axis of tire, 32···NC end mill, 33···wire electrical discharge machining tool, 34···central axis of ring casting, 35 ···desired configuration of the inner peripheral surface, 36 ···configuration of inner peripheral surface as cast, 37···inner peripheral surface after carrying out the correction, 101··· master model, 102···rubber mold, 103···sub-mold, 104···whole mold, 105···casting frame, 106···molten alloy, 107···mold for tire, 108 ···platen, 111···master model, 112···rubber mold, 113···sub-mold, 114···whole mold, 115···dummy mold, 116···casting, 118···sub-mold (sector), 119···working margin, 120···platen, 121···casting frame, 122···molten alloy, 123···mold for tire, 124···sub-mold, 125··· whole mold, 126···platen, 127···a casting frame, 128···molten alloy, 129···casting, 130···sub-mold (sector), 131···mold for tire, 201···inner configuration in state of ring casting, 202··· desired radius of inner configuration, 204···piece casting (sector block), 205···working margin for sector, 206···normal radius, 207···inner configuration after carrying out adjustment working, 208···inner configuration in state of ring, 210···ring casting, 211···fan-shaped slide dowel, 212···cam-actuated expander, 221···configuration of inner peripheral surface of centerline part before correction, 222···configuration of inner peripheral surface of the shoulder part before correction, 223 ···configuration of inner peripheral surface of the shoulder part after correction, 224···configuration of inner peripheral surface of the shoulder part after correction, 225···fixing hammer 225, 226···trestle, 233···restraining ring, and 234··· pendulum type hammer.

One embodiment of the method for producing a mold for molding a tire according to the invention (the first invention) is as follows. First, a plurality of sub-molds 1 having a surface configuration constituting a part of the surface configuration of the tire are formed as shown in Fig. 1(a), the sub-molds 1 are combined to form a ring-shaped whole mold 2 having the configuration of the tire as shown in Fig. 1(b), the thus formed ring-shaped whole mold 2 is enclosed with a casting frame 3, and a molten metal is poured into the space between the whole mold 2 and the casting frame 3 and hardened as shown in Fig. 1(c) to cast a ring casting 4 as shown in Fig. 1(d). In this case, as shown in Fig. 2, the ring casting 4 is cast so that radius of a circle constituting the inner peripheral surface of the ring casting 4 is longer by a given length, for example, 0.05-0.15%, than the objective radius (Rn). For casting the ring casting 4 in the larger size, the sub-molds 1 (see Fig. 1(a)) are formed to be larger by 0.05-0.15%, and the ring casting 4 may be cast through the above-mentioned steps , or the sub-molds 1 (see Fig. 1(a)) of usual size are formed, and adjustment may be carried out at the time of assembling the sub-molds (see Fig. 1(a)) to form the whole mold (see Fig. 1(b)).

In the steps of Fig. 1(a) to Fig. 1(d), the casting can be carried out in nearly the same manner as of conventional plaster casing method or ceramic mold method, except for carrying out the casting so that the radius of the circle constituting the inner peripheral surface of the ring casting 4 is made longer. As the molten metal used in this embodiment, mention may be made of aluminum alloys, various steel materials , etc. as suitable examples.

Furthermore, in this embodiment, the casting is carried out in such a state that a finishing margin of 2-30 mm or more is given to the outer peripheral surface of the ring casting 4. This can be easily performed by using the casting frame 3 (see Fig. 1(c)) which is larger than a frame 3 conventionally used for casting.

Then, as shown in Fig. 3, the hot top portion 5 of the ring casting 4 is cut and removed using a lathe, etc. At this step, machining of the outer peripheral surface is basically not carried out.

Then, as shown in Fig. 4(a) and Fig. 4(b), radii of circles of as many as possible which constitute the inner peripheral surface of the ring casting 4 are measured, exactly, lengths of as many as possible which are shortest distances between the axis including the center of the circle constituting the inner peripheral surface of the ring casting 4 (central axis of the tire) and a given number of first fixed points on a curved line at which a given number of supposed planes A, B, C, and D supposed to be perpendicular to the central axis 31 of the tire and to hold a given interval therebetween cross with the inner peripheral surface of the ring casting 4 are measured (hereinafter sometimes referred to as "actual radius (Rj)"). The number of actual radii (Rj) to be measured varies depending on the size of the ring casting 4, but, for example, it is preferred to measure the actual radii (Rj) at 24-720 positions for one circle constituting the inner peripheral surface of the ring casting 4. Furthermore, for convenience, the supposed planes in Fig. 4(a) are four planes of A, B, C and D, but the supposed planes which are perpendicular to the tire central axis 31 are preferably as many as possible, and, for example, it is preferred to suppose the planes to be at intervals of 10-50 mm perpendicular to the direction of the tire central axis 31. The actual radii (Rj) are not necessarily measured at equal intervals, and, for example, it suffices that the position at which measurement has been conducted can be specified by the angle from the measurement starting point, and the like. Moreover, the actual radii (Rj) can be measured by laser measuring method, etc.

Fig. 5(a) to Fig. 5(d) show radar charts obtained from the results of measurement of the actual radii (Rj) of the supposed planes A, B, C and D in Fig. 4(a). Fig. 5(a) shows the supposed plane A, Fig. 5(b) shows the supposed plane B, Fig. 5(c) shows the supposed plane C, and Fig. 5(d) shows the supposed plane D. The circle S in each Figure indicates a circle constituted of the objective radius (Rn) in each plane.

The measurement of this actual radius (Rj) may be carried out before cutting and removing the hot top portion 5 shown in Fig. 3.

Next, the outer peripheral surface of the ring casting 4 (see Fig. 4(a)) is machined to a curved surface (hereinafter sometimes referred to as "curved surface X") constituted of radii having a length ((D)+n((Rj)-(Ra))+(Ra)-(Rn)) obtained by adding a total value (n((Rj)-(Ra))+(Ra)-(Rn)) of a value (n((Rj)-(Ra)) obtained by multiplying by n (n being a real number of 1 or more) a value obtained by subtracting the average radius (Ra) from the actual radius (Rj) and a value ((Ra)-(Rn)) obtained by subtracting the objective radius (Rn) from the average radius (Ra) to a distance (D) between the tire central axis 31 and second fixed points at which straight lines including the actual radius (Rj) cross with a curved surface (hereinafter sometimes referred to as curved surface Y") of a supposed revolving body which has the above tire central axis 31 as a center and is supposed to form an outer peripheral configuration having a machining margin of 2-30 mm. Here, the average radius (Ra) is a length calculated by additional averaging of the actual radii (Rj).

Specifically, as shown in Fig. 6, for example, when actual radii (Rj(0°), Rj(10°), --------- Rj(350°)) are measured at 36 positions at an interval of 10° in the supposed plane A, the average radius (Ra) is calculated from these actual radii (Rj(0°), Rj(10°), --------- Rj(350°)) according to the following formula (1).

$$Ra = ((Rj(0°) + Rj(10°) + ----- + Rj(350°))/36 \quad (1)$$

Next, when explanation is made taking the actual radius (Rj(0°)) at an angle 0° as an example, a total value (for example, n((Rj(0°))-(Ra))+(Ra)-(Rn) in the case of the actual radius (Rj(0°)) of a value (n((Rj(0°)) - (Ra)) obtained by multiplying by n (n being a real number of 1 or more) a value obtained by subtracting the average radius (Ra) from the actual radius (Rj(0°)) and a value ((Ra)-(Rn)) obtained by subtracting the objective radius (Rn) from the average radius (Ra) is calculated. In the same manner, the total values are also calculated on the respective actual radii (Rj(0°), Rj(10°), --------- Rj(350°)), and furthermore the above total values are also calculated on all supposed planes, for example, supposed planes B, C and D (see Fig. 4).

The reason for multiplying the value obtained by subtracting the average radius (Ra) from the actual radius (Rj) by n (n being a real number of 1 or more) is that at the subsequent steps, the outer peripheral surface of the ring casting 4 (see Fig. 4(a)) is machined, the outer peripheral surface of the ring casting 4 is heated in the state of being restrained with a restraining ring to correct the outer peripheral surface of the ring casting 4 (see Fig. 4(a)) to such a state as being nearly a true circle and the ring casting 4 is removed from the restraining ring, and at the time of removal from the restraining ring, spring back which occurs upon removal of load must be anticipated. Therefore, when the value obtained by subtracting the average radius (Ra) from the actual radius (Rj) is multiplied by n, the numerical value n must be the same in one ring casting 4 (see Fig. 4(a)). It is preferred that the value n is set at a relatively high value, e.g., n = 2-3 when the ring casting 4 (Fig. 4(a)) is formed of a material of high yield strength and is set at a relatively small value, e.g., n = 1-2 when the ring casting 4 is formed of a material of low yield strength. In this embodiment, n is not particularly limited, but n = 1-3 is used.

Next, configuration of the above-mentioned curved surface Y is determined. Since this curved surface Y is a curved surface of a supposed revolving body which is supposed to have an outer peripheral configuration having a working margin of 2-30 mm and whose center is the tire central axis 31 (see Fig. 4 (a), the curved surface Y can have a configuration, for example, as shown in Fig. 7(a) to Fig. 7(d). Fig. 7(a) to Fig. 7(d) show sectional views in a plane including the tire central axis 31 of the ring casting 4, and Fig. 7(a) shows the case of the curved surface Y being in the form of a cylinder, Fig. 7(b) shows the case of the curved surface being in the form of a cylinder having a difference in level, and Fig. 7(c) and Fig. 7(d) show the cases of the curved surface Y being in the form of a tapered truncated cone.

If the working margin is less than 2 mm, the margin is too narrow and operability of actual machining is sometimes inferior and if it is more than 30 mm, loss of material is large, resulting in increase of cost.

The configuration of the curved surface Y in this embodiment is not limited to those of Fig. 7(a) and Fig. 7(d), but it is preferably the tapered truncated cone as shown in Fig. 7(c) because fitting and removal of restraining ring mentioned below are easy in the case of the ring casting 4 being fitted in the restraining ring, or the restraining ring can be commonly used for ring castings 4 of various radii.

Next, the outer peripheral surface of the ring casting 4 is machined so that the curved surface X has radii which have lengths obtained by adding a distance (D) between the tire central axis 31 and the second fixed points at which the straight lines including each of the actual radii (Rj(0°) to Rj(350°)) cross the above-mentioned curved surface Y, for example, ((D) + n((Rj(0°))-(Ra)) + (Ra)-(Rn)) in the case of the actual radius (Rj(0°)) and ((D) + n((Rj(10°)) - (Ra)) + (Ra)-(Rn)) in the case of the actual radius (Rj(10°)), to the total value calculated on each of the actual radii (Rj(0°) to Rj(350°)), for example, (n((Rj(0°))-(Ra))+(Ra)-(Rn)) in the case of the actual radius (Rj(0°)).

As shown in Fig. 9(a) and Fig. 9(b), the curved surface X is constituted by connecting the point data 20 calculated in the manner mentioned above. For connecting the point data 20, it is preferred to connect them with gentle curves such as second order curve or cubic curve, elliptic function and the like, as shown in Fig. 9(b) and not with straight lines as shown in Fig. 9(a). This step can easily be performed by computers using commercially available drafting software. In this case, when the number of the point data 20 is large, the accuracy of the curved surface X is high, but actually the number can be optionally increased or decreased depending on the dimensional accuracy of the ring casting 4. For example, it is preferred that in case the change of radius at the curved surface X is gentle, the number of the point data 20 is decreased and in case the radius abruptly changes, the number of the point data 20 is increased as many as possible.

As shown in Fig. 10(a), machining of the outer peripheral surface of the ring casting 4 in this embodiment is preferably carried out by NC end mill 32 because the shape of cut surface of the curved surface X in the direction of tire central axis is basically curved line. However, as shown in Fig. 10(b), machining may be carried out by a wire electrical discharge machining tool 33 when the shape of cut surface of the curved surface X in the direction of tire central axis is straight line or close to straight line in the range satisfying the required dimensional accuracy characteristics.

As shown in Fig. 11(a) to Fig. 11(c), the ring casting 4, the outer peripheral surface of which has been machined, is fitted in a restraining ring 21 so that the outer peripheral surface contacts with the inner peripheral surface of the restraining ring comprising a material which is smaller in thermal expansion coefficient and higher in yield strength than the material of the ring casting 4. As the material of the restraining ring 21, for example, steel materials, etc. can be suitably used when the ring casting 4 comprises an aluminum alloy.

The ring casting 4 is fitted in the restraining ring 21 so that the central axis 34 of the ring casting 4 and that of the restraining ring 21 are in the same direction. Moreover, as shown in Fig. 12(a), by providing on the platen 22 a cushioning plate 24 made of a material higher in thermal expansion coefficient than bolt 23, e.g., a copper alloy or an aluminum alloy or a cushioning material (not shown), there is generated a thrust load due to automatic shifting of the ring casting 4 to the deeper position in the restraining ring 21, namely, to the higher position in Fig. 12(a) at the time of heating, and as a result, the greater radius reducing load acts on the ring casting 4 and thus hot correction effect can be enhanced. Even if the cushioning plate 24 is not provided, the radius reducing load is generated since the thermal expansion of the ring casting 4 is greater.

Next, as shown in Fig. 12(b), the ring casting 4 and the restraining ring 21 are introduced into a heat treating oven 25 and heated at 100-400°C, and held therein for a certain period. If the heating temperature is lower than 100°C, the difference in heat expansion of the ring casting 4 and the restraining ring 21 is too small, and sufficient reduction correction cannot sometimes be performed, and if the heating temperature is higher than 400°C, the strength characteristics of the ring casting 4 after correction are deteriorated or the microscopic structure changes to cause dimensional change due to change of crystal structure, and furthermore the restraining ring 21 is apt to be oxidized to cause shortening of the life.

Moreover, the heating temperature and time are determined depending on the degree of radius reduction and thus vary depending on the conditions.

The method for setting the heating temperature is, for example, as follows. When the linear expansion coefficient of the ring casting 4 and the restraining ring 21 are $24 \times 10^{-6}$ and $11 \times 10^{-6}$, respectively and a representative diameter of the outer peripheral surface of the ring casting 4 is Ø 620 mm, and the diameter of the ring casting 4 is to be reduced by 1 mm, the minimum heating temperature necessary for the reduction of the diameter can be calculated in the following manner. First, the difference in thermal expansion of the ring casting 4 and the restraining ring 21 per unit temperature is calculated from the following formula (2).

$$(24 \times 10^{-6} - 11 \times 10^{-6}) \times 620 = 8.06 \times 10^{-3} \qquad (2)$$

From the above formula (2), the difference in thermal expansion of the ring casting 4 and the restraining ring 21 per unit temperature is $8.06 \times 10^{-3}$ (mm/°C). Then, from the resulting difference in thermal expansion, theoretical heating temperature (the necessary minimum heating temperature) T is calculated from the following formula (3).
$$(8.06 \times 10^{-3}) \times (T - 25) = 1 \qquad (3)$$

From the above formula (3), the theoretical heating temperature (the necessary minimum heating temperature) T is about 149°C. Thus, upon heating to 149°C, theoretically the inner peripheral surface of the ring casting 4 can be reduced by 1mm, but, actually, all of the differences in the thermal expansion are not converted to compression plastic deformation in the direction of the circumferential direction of the ring casting 4 due to the space formed between the ring casting 4 and the restraining ring 21, and, therefore, in order to reduce the inner peripheral surface by 1 mm in a short time, it is preferred to set the heating temperature at a temperature higher than the calculated temperature (149°C), for example, at a temperature which is 1.5-3 times the calculated temperature.

After the heating temperature is set as above and heat treatment is carried out, the radius of the inner peripheral surface of the ring casting 4 is actually measured, and in case the inner peripheral surface is not reduced to the desired size, the heat treatment is repeated. In this way, the heat treatment may be carried out a plurality of times.

Since the outer peripheral surface of the ring casting 4 is covered with the restraining ring 21, the ring casting 4 expands to fill the space over the outer peripheral surface, and further thermal expansion acts so as to reduce the inner peripheral radius of the ring casting 4. Thus, the roundness of the outer peripheral surface of the ring casting 4 is corrected so that the ring casting 4 conforms to the configuration of the inner peripheral surface of the restraining ring 21, and simultaneously the inner peripheral surface of the ring casting 4 is also corrected so as to be close to true circle and the inner radius becomes close to the objective size and reduces.

The ring casting 4 corrected to the desired shape is taken out from the heat treating oven 25 and air-cooled, and thereafter the restraining ring 21 is removed from the ring casting 4 as shown in Fig. 12 (c). In the case of fitting the ring casting 4 in the restraining ring 21, when boron nitride or a carbon-based releasing agent is coated on the inner surface of the restraining ring 21 or the outer peripheral surface of the ring casting 4, the restraining ring 21 can be easily removed.

Here, the steps of improving the roundness characteristics of the ring casting 4 explained above will be specifically explained referring to Fig. 13 and Fig. 14. As shown in Fig. 13, the ring casting 4 is formed so that the diameter is greater by a given length, and the outer peripheral surface of the ring casting 4 is machined so as to form a curved surface X which has the same tendency of deformation as from the objective inner peripheral surface or a tendency of deformation expanded by a certain quantity, and the thus machined ring casting 4 is heated under being held down by the restraining ring 21 having an inner peripheral surface nearly analogous to the curved surface Y, whereby as shown in Fig. 14, correction for reduction of radius of the ring casting 4 is performed and simultaneously the roundness characteristics are conformed to the configuration of the inner peripheral surface of the restraining ring, and as a result, there can be obtained the ring casting 4 having high dimensional accuracy including the shape of crown R which has been difficult to obtain by the conventional methods. In Fig. 13 and Fig. 14, the reference numeral 35 shows the desired configuration of the inner peripheral surface, 36 shows a configuration of the inner peripheral surface as cast, and 37 shows the inner peripheral surface after carrying out the correction.

The thus obtained ring casting 4 is installed in a back mold to produce a mold for molding a tire.

By employing such construction, radius correction and roundness correction of the ring casting can be simultaneously performed without damaging shape of crown R which is a sectional shape of a tire in width direction, and thus a mold for molding a tire of high dimensional accuracy can be produced.

Furthermore, in this embodiment, as shown in Fig. 15, grooves 29 extending in the direction of central axis 31 of the tire may be formed on the outer peripheral surface of the machined ring casting 4.

By forming the grooves, action of compression yield strain in circumferential direction of the ring casting 4 in the heat treatment is concentrated to the bottom portion of the grooves 29, and the compression strain at that position is apt to exceed the limit of the compression yield strain of the ring casting 4, and consequently correcting effects of radius, roundness and shape of crown R can be enhanced. In order to further enhance the correcting effects by grooves 29, it is preferred that depth of the grooves 29 reaches the position which is as close as possible to the product part of the ring casting 4. Moreover, the grooves 29 preferably have a shape to which stress or strain is readily concentrated, for example, a shape having a narrow width and a sharp corner portion.

If the number of the grooves 29 is too great, stress or strain applied to the ring casting 4 is dispersed, and hence the number is preferably about 2-36. As method for forming the grooves 29, there may be suitably employed a method of working by a saw blade such as band saw, contour machine, a method of forming the shape by casting out, a method of forming the grooves by internally casting, e.g., steel plates at the corresponding portions at the time of casting and thereafter drawing them out of the ring casting 4.

Next, one embodiment of the method for producing a mold for molding a tire according to the present invention (the second invention) will be explained. According to the method for producing a mold for molding a tire of this embodiment, first, in the same manner as shown in Fig. 1(a) to Fig. 1(d), a plurality of sub-molds 1 having a surface configuration constituting a part of the surface configuration of the tire are formed, the sub-molds 1 are combined to form a whole mold 2 having the configuration of the tire, the whole mold 2 is enclosed with a casting frame 3, and a molten metal is poured into the space between the whole mold 2 and the casting frame 3 and hardened to cast a ring casting 4. In this case, as shown in Fig. 2, the ring casting 4 is cast so that radius of a circle constituting the inner peripheral surface of the ring casting 4 is longer by a given length, for example, 0.05-0.15%, than the objective radius (Rn).

Next, as shown in Fig. 16, an actual radius (Rj) is measured in each of the portions obtained by dividing the inner peripheral surface of the ring casting 4 into 8-72 equal portions. Specifically, it is preferred that the radii (Rj) are measured at intervals of 20-30 mm or more in the cicumferential direction of the circle constituting the inner peripheral surface of the ring casting 4, and at intervals of 20-30 mm or more in the direction of central axis of the tire. For the measurement of the actual radii (Rj), there can be employed the same methods as in the embodiment of the first invention mentioned above, but in the measurement of the actual radii (Rj) in this embodiment, the minute measurement as in the embodiment of the first invention may not be conducted.

Then, the outer peripheral surface of the casting is subjected to machining so that the casting has an outer peripheral configuration having a working margin of 2-30 mm with respect to the desired shape of the tire. The configuration of the outer peripheral surface to be formed by the machining can be one as shown, for example, in Fig. 17(a) to Fig. 17(d). Fig. 17(a) to Fig. 17(d) show sectional views in a plane including the tire central axis 31 of the ring casting 4, and Fig. 17(a) shows the case of a cylinder, Fig. 17(b) shows the case of a cylinder having a difference in level, and Fig. 17(c) and Fig. 17(d) show the cases of a tapered truncated cone. In this embodiment, it is preferred to carry out the machining so that the configuration of the outer peripheral surface of the ring casting 4 is a tapered truncated cone as shown in Fig. 17(c) because fitting and removal of restraining ring mentioned below are easy in the case of the ring casting 4 being fitted in the restraining ring and the restraining ring can be commonly used for ring castings 4 of various diameters. Furthermore, in this embodiment, since the configuration of the outer peripheral surface is relatively not complicated, the machining may not be an NC machining and may be a wire electric discharge machining.

Next, as shown in Fig. 18, to the portions of the outer peripheral surface of the machined casting 4 corresponding to the portions in which the actual radius (Rj) is measured are stuck, by a heat resistant adhesive or resistance welding, metal plates 30 having a thickness (hereinafter sometimes referred to as "thickness Z") corresponding to a total value (n((Rj)-(Rs))+(Rs)-(Rn)) of a value (n((Rj)-(Rs)) obtained by multiplying by n (n being a real number of 1 or more) a value obtained by subtracting a radius (Rs) of an inscribed circle at the inner peripheral surface of the ring casting 4 from the actual radius (Rj) and a value ((Rs)-(Rn)) obtained by subtracting the objective radius (Rn) from the radius (Rs) of the inscribed circle. The materials of the metal plates 30 are not limited as long as they are metals. This is because even if the metal plate 30 comprises a metal lower in yield strength than the material of the ring casting 4, some percentage of action load is surely transmitted to the ring casting 4 by the clamping with the restraining ring mentioned hereinafter.

As to the size of the metal plates 30, those which have a shape of quadrilateral, circle, ellipse or the like and have an area of 100-2500 mm$^2$ can be suitably used. If the area of the metal plate 30 exceeds 2500 mm$^2$, correction of partial strain of the inner peripheral surface of the ring casting 4 cannot be sometimes sufficiently performed, and if the area of the metal plate 30 is less than 100 mm$^2$, the metal plate 30 sometimes sinks into the outer peripheral surface of the ring casting 4 at the time of correction. The intervals between the stuck metal plates 30 is preferably 20-100 mm. However, the intervals of the metal plates 30 depend greatly upon the roundness characteristics of the inner peripheral surface of the ring casting 4. Therefore, the interval may be optionally changed, for example, when the number of the partial deformation portions is great in the configuration of the inner peripheral surface of the ring casting 4, the interval between the metal plates 30 is made small, and when the number of the partial deformation portions is small, the interval between the metal plates 30 is made great.

Thereafter, as shown in Fig. 19(a) to Fig. 19(b), the ring casting 4 to which the metal plates 30 are stuck is fitted in a restraining ring 21 so that the outer peripheral surface of the ring casting 4 contacts with the inner peripheral surface of the restraining ring 21 which comprises a material smaller in thermal expansion coefficient and higher in yield strength than the ring casting 4. As for the material of the restraining ring 21, for example, steel materials, etc. can be suitably used in the case of the ring casting 4 comprising an aluminum alloy.

When the ring casting 4 is fitted in the restraining ring 21, the central axis 34 of the ring casting 4 and that of the restraining ring 21 are allowed to be in the same direction. Moreover, as shown in Fig. 19(c), by providing on the platen 22 a cushioning plate 24 made of a material higher in thermal expansion coefficient than bolt 23, e.g., a copper alloy or an aluminum alloy or a cushioning material (not shown), there is generated a thrust load due to automatic shifting of the ring casting 4 to the deeper position in the restraining ring 21, namely, to the higher position in Fig. 19(c) at the time of heating, and as a result, the greater radius reducing load acts on the ring casting 4 and thus hot correction effect can be enhanced. Even if the cushioning plate 24 is not provided, the radius reducing load at the time of heating is generated since the thermal expansion of the ring casting 4 is greater.

Next, as shown in Fig. 19(d), the ring casting 4 and the restraining ring 21 are introduced into a heat treating oven 25 and heated at 100-400°C, and held therein for a certain period. This step of heating the ring casting 4 can be carried out in nearly the same manner as in the embodiment of the first invention.

In this embodiment, the above heat treatment is repeated until the configuration of the inner peripheral surface of the ring casting 4 reaches the desired size, and when the configuration of the inner peripheral surface of the ring casting 4 reaches the desired size, the ring casting 4 and the restraining ring 21 are taken out from the heat treating oven 25 and air-cooled, and thereafter the restraining ring 21 is removed from the ring casting 4 as shown in Fig. 20 (a), and the metal plates 30 which are stuck to the outer peripheral surface of the ring casting 4 are removed, whereby correction for reduction of radius of the ring casting 4 is performed and simultaneously the roundness characteristics is allowed to conform to the configuration of the inner peripheral surface of the restraining ring, and, thus, there can be obtained the ring casting 4 having high dimensional accuracy including the shape of crown R which is difficult to obtain by the conventional methods.

Although illustration in the drawings is omitted, thereafter, the outer peripheral surface of the ring casting 4 is machined, and the ring casting 4 is installed in a back mold or the like to produce a mold for molding a tire.

By constructing in this way, radius correction and roundness correction of the ring casting can be simultaneously performed without damaging shape of crown R which is a sectional shape of a tire in width direction, and thus a mold for molding a tire of high dimensional accuracy can be produced. In this embodiment, NC machining such as NC end mill machining is not needed, and all machining processes can be carried out using general-purpose platens, etc.

Furthermore, in this embodiment, as shown in Fig. 15, grooves 29 extending in the direction of central axis 31 of the tire may be formed on the outer peripheral surface of the machined ring casting 4. By forming the grooves, there can be obtained the same effects as in the embodiment of the first invention.

Examples

The present invention will be explained in more specifically by the following examples, which should not be construed as limiting the invention in any manner.

In all of the examples, a mold for tire 10 of 2P mold type and of 205/65R15 in tire size having a configuration as shown in Fig. 22 was produced. The kinds of basic pitches are three kinds of S, M and L, and the numbers of pieces are 11 for S, 13 for M and 12 for L. Casting of sipe blades, etc. was not carried out.

As a basic method for producing the mold for tire, a plaster casting method was employed, and preset shrinkage was 11/1000 - 15/1000, which was somewhat changed for the respective portions. The material of the plaster mold was Hydroperm foamed plaster manufactured by USG Co., Ltd. and prepared with a water content of 70% by weight and a foaming volume increment of 60%. The casting alloy was AC4C alloy (7% Si, 1% Cu, 0.5% Fe, and 0.4% Mg with the remainder being Al), and the casting method was gravity casting (pouring method).

(Example 1)

First, as shown in Fig. 23(a), a ring casting 4 was produced so that the diameter of the circle constituting the inner peripheral surface was greater by about 0.5 mm (0.7/1000). The hot top portion 5 of this ring casting 4 was cut and removed, and actual radii of the inner peripheral surface of the ring casting 4 as cast were measured at 4 positions in tire width direction and 72 position in circumferential direction, namely, 288 positions in total. The results of measurement are shown in Table 1.

Table 1

| Radius of each portion | +0.10 to +0.37 mm with respect to the objective size |
|---|---|
| Roundness of each portion | 0.14 to 0.26 mm in deflection width from standard true circle |
| Shape of crown R | 0.18 to 0.25 mm in deflection width with respect to the objective shape of crown R |

From the results of measurement, the outer peripheral surface of the ring casting 4 was machined to form a curved surface constituted of radii having a length $((D)+n((Rj)-(Ra))+(Ra)-(Rn))$ obtained by adding a total value $(1.5(Rj)-(Ra))+(Ra)-(Rn))$ of a value $(1.5((Rj)-(Ra))$ obtained by multiplying by 1.5 a value obtained by subtracting the average radius (Ra) from the actual radius (Rj) and a value $((Ra)-(Rn))$ obtained by subtracting the objective radius (Rn) from the average radius (Ra) to a distance (D) between the tire central axis and second fixed points at which straight lines including the actual radius (Rj) cross with a curved surface of a supposed revolving body which has the above tire central axis as a center and is supposed to form an outer peripheral configuration having a working margin of about 20 mm at a minimum. In this example, the respective point data were approximated by a second order curve passing through the three points. The machining was carried out by a five-shaft machine.

The machined ring casting 4 was fitted in a restraining ring 21 (made of S50C) and heated at 250°C for 4 hours and then air-cooled in the same manner as shown in Fig. 12(b). After the heat treatment, the ring casting 4 was removed from the restraining ring 21, and the radii of the inner peripheral surface of the ring casting 4 were measured. The results are shown in Table 2.

Table 2

| Radius of each portion | +0.02 to +0.16 mm with respect to the objective size |
|---|---|
| Roundness of each portion | 0.09 to 0.14 mm in deflection width from standard true circle |
| Shape of crown R | 0.05 to 0.15 mm in deflection width with respect to the objective shape of crown R |

As shown in Table 2, the ring casting 4 after subjected to the heat treatment was higher in accuracy on all of radius, roundness and shape of crown R than the ring casting as cast.

(Example 2)

First, a ring casting 4 having the same configuration as that of the ring casting 4 produced in Example 1 as shown in Fig. 23 was produced. The actual radii of the inner peripheral surface of this ring casting 4 in the state of being as cast were measured at 3 positions in tire width direction and 24 positions in circumferential direction, namely, 72 positions in total. The results of measurement are shown in Table 3.

Table 3

| Radius of each portion | +0.12 to +0.36 mm with respect to the objective size |
|---|---|
| Roundness of each portion | 0.15 to 0.24 mm in deflection width from standard true circle |
| Shape of crown R | 0.13 to 0.25 mm in deflection width with respect to the objective shape of crown R |

Then, the outer peripheral surface of the ring casting 4 was machined to form an outer peripheral configuration having a working margin of about 20 mm at a minimum with respect to the desired tire configuration.

Then, to the portions of the outer peripheral surface of the machined ring casting 4 corresponding to the portions in which the actual radius ($R_j$) was measured were stuck, by percussion welding, beryllium copper (BeA25) thin plates of $10 \times 10$ mm in size and having a thickness corresponding to a total value ($1.5((R_j)-(R_s))+(R_s)-(R_n)$) of a value ($1.5((R_j)-(R_s))$) obtained by multiplying by 1.5 a value obtained by subtracting a radius ($R_s$) of an inscribed circle at the inner peripheral surface of the ring casting 4 from the actual radius ($R_j$) and a value ($(R_s)-(R_n)$) obtained by subtracting the objective radius ($R_n$) from the radius ($R_s$) of the inscribed circle.

The ring casting 4 was fitted in a restraining ring 21 (made of S50C) and heated at 250°C for 4 hours and then air-cooled in the same manner as shown in Fig. 19(d). After the heat treatment, the ring casting 4 was removed from the restraining ring 21, and the radii of the inner peripheral surface of the ring casting 4 were measured. The results are shown in Table 4.

Table 4

| Radius of each portion | +0.00 to +0.17 mm with respect to the objective size |
|---|---|
| Roundness of each portion | 0.10 to 0.18 mm in deflection width from standard true circle |
| Shape of crown R | 0.08 to 0.14 mm in deflection width with respect to the objective shape of crown R |

As shown in Table 4, the ring casting 4 after subjected to the heat treatment was higher in accuracy on all of radius, roundness and shape of crown R than the ring casting as cast.

(Example 3)

First, a ring casting 4 in which the diameter of the circle constituting the inner peripheral surface was greater by about 0.5 mm (0.7/1000) was produced as shown in Fig. 25. The actual radii of the inner peripheral surface of this ring casting 4 in the state of being as cast were measured at 4 portions in tire width direction and 72 portions in circumferential direction, namely, 288 portions in total. The results of measurement are shown in Table 5.
Table 5

| Radius of each portion | +0.08 to +0.35 mm with respect to the objective size |
|---|---|
| Roundness of each portion | 0.12 to 0.25 mm in deflection width from standard true circle |
| Shape of crown R | 0.14 to 0.26 mm in deflection width with respect to the objective shape of crown R |

The outer peripheral surface of the ring casting 4 was machined to form the same curved surface as in Example 1, and then sixteen grooves 29 of 3 mm in width as shown in Fig. 26 were formed at equal intervals on the outer peripheral surface of the ring casting. Thereafter, the ring casting 4 was heat treated in the same manner as in Example 1, and removed from the restraining ring 21 (see Fig. 24), and radii of the inner peripheral surface of the ring casting 4 were measured. The results are shown in Table 6.
Table 6

| Radius of each portion | +0.02 to +0.12 mm with respect to the objective size |
|---|---|
| Roundness of each portion | 0.06 to 0.11 mm in deflection width from standard true circle |
| Shape of crown R | 0.03 to 0.10 mm in deflection width with respect to the objective shape of crown R |

As shown in Table 6, the ring casting 4 after subjected to the heat treatment was higher in accuracy on all of radius, roundness and shape of crown R than the ring casting as cast.
As explained above, there can be provided a method for producing a mold for molding a tire according to which radius correction and roundness correction of a ring casting can be simultaneously performed without damaging shape of crown R which is a sectional shape of a tire in width direction.
There is provided a method for producing a mold for molding a tire according to which radius correction and roundness correction of a ring casting can be simultaneously performed without damaging shape of crown R which is a sectional shape of a tire in width direction. The method comprises machining the outer peripheral surface of the ring casting obtained by the casting so that the casting has a desired configuration (a curved surface Y), fitting the machined ring casting 4 in a restraining ring which is lower in thermal expansion coefficient and higher in yield strength than the ring casting 4 so that the outer peripheral surface of the ring casting 4 contacts with the inner peripheral surface of the restraining ring, and heating the casting at 100-400°C to reduce the radius of the inner peripheral surface of the ring casting 4 and simultaneously improve the roundness characteristics of the casting.

**Claims**

1. A method for producing a mold for molding a tire which comprises forming a plurality of sub-molds (1) having as a surface configuration a configuration constituting a part of a surface configuration of the tire, combining the sub-molds to form a whole mold (2) having the configuration of the tire, enclosing the thus formed whole mold (2) with a casting frame (3), and pouring a molten metal into the space between the whole mold and the casting frame, and hardening the molten metal to cast a casting (4), thereby obtaining a mold for molding a tire which has a configuration reverse to that of the tire, **characterized by** casting said casting (4) so that radius of a circle constituting the inner peripheral surface of the casting is longer by a given length than the objective radius (Rn), machining the configuration of the outer peripheral surface of the casting so that the casting has a configuration of a curved surface X defined below, fitting the machined casting in a restraining ring which is lower in thermal expansion coefficient and higher in yield strength than the casting so that the outer peripheral surface of the casting contacts with the inner peripheral surface of the restraining ring, and heating the casting at 100-400°C to reduce the radius of the inner peripheral surface of the casting and simultaneously improve the roundness characteristics of the casting;

curved surface X: a curved surface constituted of radii having a length (D)+n((Rj)-(Ra))+(Ra)-(Rn) obtained by adding a total value n((Rj)-(Ra))+(Ra)-(Rn) of a value n((Rj)-(Ra) obtained by multiplying by n, n being a real number of 1 or more, a value obtained by subtracting an average radius (Ra) from an actual radius (Rj) and a value (Ra)-(Rn) obtained by subtracting the objective radius (Rn) from the average radius (Ra) to a distance (D) between a central axis of the tire and a second fixed point at which straight lines including the actual radius (Rj) cross with a curved surface Y of a supposed revolving body having the above central axis as a center and supposed to form an outer peripheral configuration having a working margin of 2-30 mm (in which the actual radius (Rj) is a length measured as a shortest distance between the axis including the center of the circle, i.e. the central axis of tire, and a given number of first fixed points on a curved line at which a given number of supposed planes supposed to be perpendicular to the central axis of the tire and to hold a given interval therebetween cross with the inner peripheral surface perpendicular to the central axis of the tire and to hold a given interval therebetween cross with the inner peripheral surface of the casting; and the average radius (Ra) is a length calculated by additional averaging of the actual radii (Rj).

2. A method for producing a mold for molding a tire which comprises forming a plurality of sub-molds (1) having as a surface configuration a configuration constituting a part of a surface configuration of the tire, combining the sub-molds to form a whole mold (2) having the configuration of the tire, enclosing the thus formed whole mold (2) with a casting frame (3), and pouring a molten metal into the space between the whole mold and the casting frame, and hardening the molten metal to cast a casting (4), thereby obtaining a mold for molding a tire which has a configuration reverse to that of the tire, **characterized by** casting said casting (4) so that radius of a circle constituting the inner peripheral surface of the casting is longer by a given length than the objective radius (Rn), measuring an actual radius (Rj) in each of the portions obtained by dividing the inner peripheral surface of the casting into 8-72 equal portions, machining the outer peripheral surface of the casting so that the casting has an outer peripheral configuration having a working margin of 2-30 mm with respect to the desired shape of the tire, sticking a metal plate having a thickness Z defined below to the portion of the outer peripheral surface of the machined casting corresponding to each of the portions in which the actual radius (Rj) is measured, fitting the casting to which the metal plate is stuck in a restraining ring which is lower in thermal expansion coefficient and higher in yield strength than the casting so that the outer peripheral surface of the casting contacts with the inner peripheral surface of the restraining ring, and heating the casting at 100-400°C to reduce the radius of the inner peripheral surface of the casting and simultaneously improve the roundness characteristics of the casting;

thickness Z: a thickness corresponding to a total value n((Rj)-(Rs))+(Rs)-(Rn) of a value n((Rj)-(Rs) obtained by multiplying by n, n being a real number of 1 or more, a value obtained by subtracting a radius (Rs) of an inscribed circle at the inner peripheral surface of the casting from the actual radius (Rj) and a value ((Rs)-(Rn)) obtained by subtracting the objective radius (Rn) from the radius (Rs) of the inscribed circle (in which the actual radius (Rj) is a length measured as a shortest distance between the axis including the center of the circle, i.e. the central axis of tire, and a given number of the first fixed points on a curved line at which a given number of supposed planes supposed to be perpendicular to the central axis of the tire and to hold a given interval therebetween cross with the inner peripheral surface of the casting).

3. A method for producing a mold for molding a tire according to claim 1 or 2, wherein grooves extending in the direction of the central axis of the tire are formed on the outer peripheral surface of the machined casting.

**Patentansprüche**

1. Verfahren zum Herstellen einer Form zum Formen eines Reifens, das folgende Schritte aufweist
Ausbilden einer Vielzahl von Unterformen (1), die als eine Flächengestalt eine Gestalt aufweisen, die einen Teil einer Oberflächengestalt des Reifens bildet, Kombinieren der Unterformen, um eine gesamte Form (2) auszubilden, die die Gestalt des Reifens aufweist, Umgeben der **dadurch** ausgebildeten gesamten Form (2) mit einem Gussrahmen (3), und Gießen eines geschmolzenen Metalls in den Raum zwischen der gesamten Form und dem Gussrahmen, und Härten des geschmolzenen Metalls, um eine Gussform (4) zu gießen, wodurch eine Form zum Formen eines Reifens erhalten wird, die eine inverse Gestalt zu jener des Reifens aufweist, **gekennzeichnet durch**
Gießen der Gussform (4), so dass ein Radius eines Kreises, der die Innenumfangsfläche der Gussform bildet, um eine gegebene Länge länger als der wirkliche Radius (Rn) ist, Bearbeiten der Gestalt der Außenumfangsfläche der Gussform, so dass die Gussform eine Gestalt einer gebogenen Fläche X aufweist, die nachfolgend definiert ist,
Einpassen der bearbeiteten Gussform in einen Rückhaltering, der in einem Wärmeausdehnungskoeffizienten niedriger und in einer Streckgrenze höher als die Gussform ist, so dass die Außenumfangsfläche der Gussform die Innenumfangsfläche des Rückhalterings berührt, und
Erwärmen der Gussform auf 100-400°C, um den Radius der Innenumfangsfläche der Gussform zu verringern und gleichzeitig die Rundheitscharakteristik der Gussform zu verbessern;

gebogene Fläche X: eine gebogene Fläche, die aus Radien gebildet ist, die eine Länge (D)+n((Rj)-(Ra))+(Ra)-(Rn), die erhalten wird **durch** ein Addieren eines Gesamtwerts n((Rj)-(Ra))+(Ra)-(Rn) eines Werts n(Rj)-(Ra), der erhalten wird **durch** Multiplizieren von n, wobei n eine reelle Zahl von 1 oder mehr ist, mit einem Wert, der **durch** Subtrahieren eines Durchschnittsradius (Ra) von einem tatsächlichen Radius (Rj) erhalten wird, und einem Wert (Ra)-(Rn), der **durch** Subtrahieren des wirklichen Radius (Rn) von dem durchschnittlichen Radius (Ra) erhalten wird, zu einem Abstand (D) zwischen einer Mittelachse des Reifens und einem zweiten festen Punkt, an dem sich gerade Linien einschließlich des tatsächlichen Radius (Rj) mit einer gebogenen Fläche Y eines angenommenen Drehkörpers kreuzen, der die vorangehende Mittelachse als eine Mitte aufweist und angenommen wird, eine Außenumfangsgestalt auszubilden, die eine Arbeitsspanne von 2-30 mm aufweist, in der der tatsächliche Radius (Rj) eine Länge ist, die als eine kürzeste Distanz zwischen der Achse einschließlich der Mitte des Kreises, d.h. die Mittelachse des Reifens, und einer gegebenen Anzahl von ersten festen Punkten auf einer gebogenen Linie gemessen ist, an der eine gegebene Anzahl von angenommenen Ebenen, von denen angenommen wird, senkrecht zu der Mittelachse des Reifens zu sein, und um ein gegebenes Intervall dazwischen quer zu der Innenumfangsfläche senkrecht zu der Mittelachse des Reifens zu halten und um ein gegebenes Intervall dazwischen quer zu der Innenumfangsfläche der Gussform zu halten; und der durchschnittliche Radius (Ra) eine Länge ist, die **durch** ein zusätzliches Mitteln der tatsächlichen Radien (Rj) berechnet wird.

2. Verfahren zum Herstellen einer Form zum Formen eines Reifens, das Folgendes aufweist

Ausbilden einer Vielzahl von Unterformen (1), die als eine Flächengestalt eine Gestalt aufweisen, die einen Teil einer Flächengestalt des Reifens bildet, Verbinden der Unterformen, um eine gesamte Form (2) auszubilden, die die Gestalt des Reifens aufweist, Einschließen der **dadurch** geformten gesamten Form (2) mit einem Gussrahmen (3), und Gießen eines geschmolzenen Metalls in den Raum zwischen der gesamten Form und dem Gussrahmen, und Härten des geschmolzenen Metalls, um eine Gussform (4) zu gießen, wodurch eine Form zum Formen eines Reifens erhalten wird, die eine umgekehrte Gestalt zu jener des Reifens aufweist, **gekennzeichnet, durch** Gießen der Gussform (4), so dass ein Radius eines Kreises, der die Innenumfangsfläche der Gussform bildet, um eine gegebene Länge länger als der wirkliche Radius (Rn) ist, Messen eines tatsächlichen Radius (Rj) in jedem der Abschnitte, die **durch** ein Teilen der Innenumfangsfläche der Gussform in 8-72 gleiche Abschnitte erhalten sind, Bearbeiten der Außenumfangsfläche der Gussform, so dass die Gussform eine Außenumfangsgestalt aufweist, die eine Arbeitsspanne von 2-30 mm hinsichtlich der gewünschten Form des Reifens aufweist, Befestigen einer Metallplatte mit einer Dicke Z, die nachfolgend definiert wird, an dem Abschnitt der Außenumfangsfläche der bearbeiteten Gussform entsprechend zu jedem der Abschnitte, in dem der tatsächliche Radius (Rj) gemessen ist, Einpassen der Gussform, an der die Metallplatte befestigt ist, in einen Rückhaltering, der in einem Wärmeausdehnungskoeffizienten niedriger und in einer Streckgrenze höher als die Gussform ist, so dass die Außenumfangsfläche der Gussform die Innenumfangsfläche des Rückhalterings berührt, und Erwärmen der Gussform auf 100-400°C, um den Radius der Innenumfangsfläche der Gussform zu verringern und gleichzeitig die Rundheitscharakteristik der Gussform zu verbessern;

Dicke Z: eine Dicke, die einem Gesamtwert n((Rj)-(Rs))+(Rs)-(Rn) eines Werts n((Rj)-(Rs)) entspricht, der erhalten wird **durch** ein Multiplizieren von n, wobei n eine reelle Zahl von 1 oder mehr ist, mit einem Wert, der durch Subtrahieren eines Radius (Rs) eines eingeschriebenen Kreises an der Innenumfangsfläche der Gussform von dem tatsächlichen Radius (Rj) erhalten wird, und einem Wert ((Rs)-(Rn)), der **durch** Subtrahieren des wirklichen Radius (Rn) von dem Radius (Rs) des eingeschriebenen Kreises erhalten wird (in dem der tatsächliche Radius (Rj) eine Länge ist, die als ein kürzester Abstand zwischen der Achse einschließlich der Mitte des Kreises, d.h. die Mittelachse des Reifens, und einer gegebenen Anzahl der ersten festen Punkte auf einer gebogenen Linie gemessen ist, an der eine gegebene Anzahl von angenommenen Ebenen, von denen angenommen wird, senkrecht zu der Mittelachse des Reifens zu sein und um ein gegebenes Intervall dazwischen quer über den Innenumfang der Gussform zu halten).

3. Verfahren zum Herstellen einer Form zum Formen eines Reifens nach Anspruch 1 oder 2, wobei Nuten, die sich in der Richtung der Mittelachse des Reifens erstrecken, an der Außenumfangsfläche der bearbeiteten Gussform ausgebildet sind.

## Revendications

1. Procédé de fabrication d'un moule pour le moulage d'un pneu qui comprend le fait de former une pluralité de moules auxiliaires (1) ayant à titre de configuration de surface une configuration constituant une partie d'une configuration de surface du pneu, de combiner les moules auxiliaires pour former la totalité d'un moule (2) ayant la configuration du pneu, d'enfermer la totalité du moule (2) ainsi formé avec une carcasse de coulée (3), et de verser du métal en fusion dans l'espace entre la totalité du moule et la carcasse de coulée, et de durcir le métal en fusion pour faire couler une pièce de coulée (4), obtenant ainsi un moule pour le moulage d'un pneu qui a une configuration inverse à celle du pneu, **caractérisé par** le fait de faire couler ladite pièce de coulée (4) de sorte que le rayon d'un cercle constituant la surface périphérique interne de la pièce de coulée soit plus long par une longueur donnée que le rayon objectif (Rn), d'usiner la configuration de la surface périphérique externe de la pièce de coulée de sorte que la pièce de coulée ait une configuration d'une surface courbe X définie ci-dessous, d'ajuster la pièce de coulée usinée dans un anneau de retenue qui a un coefficient de dilatation thermique plus petit que et une limite d'élasticité plus grande que la pièce de coulée de sorte que la surface périphérique externe de la pièce de coulée se mette en contact avec la surface périphérique interne de l'anneau de retenue, et de chauffer la pièce de coulée à 100-400°C pour réduire le rayon de la surface périphérique interne de la pièce de coulée et, en même temps, pour améliorer les caractéristiques d'ovalisation de la pièce de coulée ;

surface courbe X : une surface courbe constituée de rayons ayant une longueur (D)+n((Rj)-(Ra))+(Ra)-(Rn) obtenue en ajoutant une valeur totale n((Rj)-(Ra))+(Ra)-(Rn) d'une valeur n((Rj)-(Ra) obtenue en multipliant par n, n étant un nombre réel de 1 ou plus, une valeur obtenue en soustrayant un rayon moyen (Ra) d'un rayon réel (Rj) et une valeur (Ra)-(Rn) obtenue en soustrayant le rayon objectif (Rn) du rayon moyen (Ra) à une distance (D) entre un axe central du pneu et un deuxième point fixe auquel des lignes droites comportant le rayon réel (Rj) croisent une surface courbe Y d'un corps rotatif supposé ayant l'axe central susmentionné en tant que centre et censé former une configuration périphérique externe ayant une marge de travail de 2 à 30 mm (où le rayon réel (Rj) est une longueur mesurée comme étant la distance la plus courte entre l'axe comportant le centre du cercle, c.-à-d. l'axe central du pneu, et un nombre donné de premiers points fixes sur une ligne courbe auquel un nombre donné de plans supposés censés être perpendiculaires à l'axe central du pneu et maintenir un intervalle donné entre eux croisent la surface périphérique interne perpendiculaire à l'axe central du pneu et maintenir un intervalle donné entre eux croisant la surface périphérique interne de la pièce de coulée ; et le rayon moyen (Ra) est une longueur calculée en faisant une moyenne additionnelle des rayons réels (Rj).

2. Procédé de fabrication d'un moule pour le moulage d'un pneu qui comprend le fait de former une pluralité de moules auxiliaires (1) ayant comme configuration de surface une configuration constituant une partie d'une configuration de la surface du pneu, de combiner les moules auxiliaires pour former une totalité du moule (2) ayant la configuration du pneu, d'encercler la totalité du moule (2) ainsi formé avec un cadre de coulée (3), et de verser un métal en fusion dans l'espace entre la totalité du moule et la carcasse de coulée, et de durcir le métal en fusion pour faire couler une pièce de coulée (4), obtenant ainsi un moule pour le moulage d'un pneu qui a une configuration inverse à celle du pneu, **caractérisé par** le fait de faire couler ladite pièce de coulée (4) de sorte que le rayon d'un cercle constituant la surface périphérique interne de la pièce de coulée soit plus long d'une longueur donnée que le rayon objectif (Rn), de mesurer un rayon réel (Rj) dans chacune des parties obtenues en divisant la surface périphérique interne de la pièce de coulée en 8 à 72 parties égales, d'usiner la surface périphérique externe de la pièce de coulée de sorte que la pièce de coulée ait une configuration périphérique externe ayant une marge de travail de 20 à 30 mm par rapport à la forme désirée du pneu, de coller une plaque métallique ayant une épaisseur Z définie au-dessous de la partie de la surface périphérique externe de la pièce de coulée usinée correspondant à chacune des parties dans lesquelles le rayon réel (Rj) est mesuré, d'ajuster la pièce de coulée à laquelle la plaque métallique est collée dans un anneau de retenue qui a un coefficient de dilatation thermique inférieur et une limite d'élasticité supérieure à la pièce de coulée de sorte que la surface périphérique externe de la pièce de coulée se mette en contact avec la surface périphérique interne de l'anneau de retenue, et de chauffer la pièce de coulée à 100-400°C pour réduire le rayon de la surface périphérique interne de la pièce de coulée et en même temps pour améliorer les caractéristiques d'ovalisation de la pièce de coulée ;

épaisseur Z : une épaisseur correspondant à une valeur totale n((Rj)-(Rs))+(Rs)-(Rn) d'une valeur n((Rj)-(Rs) obtenue en multipliant par n, n étant un nombre réel de 1 ou plus, une valeur obtenue en soustrayant un rayon (Rs) d'un cercle inscrit à la surface périphérique interne de la pièce de coulée du rayon réel (Rj) et une valeur ((Rs)-(Rn)) obtenue en soustrayant le rayon objectif (Rn) du rayon (R) du cercle inscrit (où le rayon réel (Rj) est une longueur mesurée comme étant la distance la plus courte entre l'axe comportant le centre du cercle, c.-à-d. l'axe central du pneu, et un nombre donné des premiers points fixes sur une ligne courbe à laquelle un nombre donné de plans supposés censés être perpendiculaires à l'axe central du pneu et maintenir un intervalle donné entre eux croisant la surface périphérique interne de la pièce de coulée).

3. Procédé de production d'un moule pour le moulage d'un pneu selon la revendication 1 ou 2, dans lequel des rainures s'étendant dans la direction de l'axe central du pneu sont formées sur la surface périphérique externe de la pièce de coulée usinée.

FIG.1(a)

FIG.1(b)

FIG.1(c)

FIG.1(d)

FIG.2

Rn

FIG.3

5

4

FIG.4(a)

31

4

A
B
C
D

FIG.4(b)

0°

4

Rj

270°

90°

31

180°

20

FIG.5(a)

FIG.5(b)

FIG.5(c)

FIG.5(d)

FIG.6

FIG.7(a)

FIG.7(b)

FIG.7(c)

FIG.7(d)

## FIG.8(a)

Labels: $R_j$, $R_n$, $R_a$, $n((R_j)-(R_a))+(R_a)-(R_n)$, $D$, $0°$, $270°$, $90°$, $180°$, $Y$, $X$, $3\ 1$, $4$

## FIG.8(b)

Labels: $R_j$, $R_a$, $R_n$, $3\ 1$, $n((R_j)-(R_a))+(R_a)-(R_n)$, $4$, $X$, $Y$, $D$

FIG.9(a)

FIG.9(b)

FIG.10(a)

FIG.10(b)

FIG.11(a)  FIG.11(b)  FIG.11(c)

FIG.12(a)  FIG.12(b)

FIG.12(c)

FIG.13

FIG.14

FIG.15

ABOUT 1~5mm

FIG.16

FIG.17(a)

FIG.17(b)

FIG.17(c)

FIG.17(d)

FIG.18(a)

$n((Rj)-(Ra))+(Rs)-(Rn)$

Rj

Rs

Rn

3 0

4

FIG.18(b)

4

3 0

20～100mm

20～100mm

FIG.19(a)

FIG.19(b)

FIG.19(c)

FIG.19(d)

FIG.20

FIG.21(a)

FIG.21(b)

FIG.22

FIG.23(a)

FIG.23(b)

FIG.24

FIG.25

15mm

10°

140mm

4

φ790mm

FIG.26

3mm

2 9

4

FIG.27(a)

FIG.27(b)

FIG.27(c)

FIG.27(d)

FIG.27(e)

FIG.27(f)

FIG.27(g)

FIG.27(h)

EP 1 393 849 B1

FIG.28(a)    FIG.28(b)    FIG.28(c)    FIG.28(d)    FIG.28(e)

FIG.28(g)

FIG.28(f)    FIG.28(h)    FIG.28(i)    FIG.28(j)

EP 1 393 849 B1

FIG.29(a)

FIG.29(b)

FIG.29(c)

FIG.29(d)

FIG.29(e)

FIG.29(f)

FIG.29(g)

EP 1 393 849 B1

FIG.30(a)

201
202
204

FIG.30(b)

204 205

FIG.30(c)

206
204

FIG.30(d)

204

FIG.30(e)

206
204

FIG.30(f)

202
207
208

FIG.31

FIG.32(a)   FIG.32(b)

FIG.32(c)

FIG.33(a)

FIG.33(b)

FIG.33(c)

FIG.34(a)

FIG.34(b)

FIG.34(c)

FIG.35

2 1 0

FIG.36

2 1 0     2 3 3

FIG.37

2 3 3

2 1 0

FIG.38

2 3 3

2 1 0

FIG.39

2 3 4

2 1 0

θ

FIG.40

2 1 0

FIG.41

FIG.42